(19) Europäisches Patentamt
European Patent Office
Office européen des brevets

(11) EP 0 476 922 B1

(12) **EUROPEAN PATENT SPECIFICATION**

(45) Date of publication and mention of the grant of the patent:
**10.06.1998 Bulletin 1998/24**

(51) Int Cl.[6]: **H04N 9/84**

(21) Application number: **91308294.7**

(22) Date of filing: **11.09.1991**

(54) **Circuit for processing the frequency of a signal for a video cassette recorder**

Schaltung zum Verarbeiten der Frequenz eines Signals in einem Videorecorder

Circuit pour le traitement de la fréquence d'un signal dans un enregistreur à cassette vidéo

(84) Designated Contracting States:
**DE FR GB IT**

(30) Priority: **15.09.1990 JP 244649/90**

(43) Date of publication of application:
**25.03.1992 Bulletin 1992/13**

(73) Proprietors:
- **Hitachi, Ltd.**
  **Chiyoda-ku, Tokyo 101-0062 (JP)**
- **HITACHI MICROCOMPUTER SYSTEM LTD.**
  **Kodaira-shi Tokyo (JP)**

(72) Inventors:
- **Yamamoto, Norihisa**
  **Sawa-gun, Gunma-ken (JP)**
- **Furihata, Makoto**
  **Sawa-gun, Gumma-ken (JP)**

(74) Representative: **Calderbank, Thomas Roger et al**
**MEWBURN ELLIS**
**York House**
**23 Kingsway**
**London WC2B 6HP (GB)**

(56) References cited:
**EP-A- 0 024 744** **DE-A- 3 731 767**
**US-A- 5 083 213**

- **PATENT ABSTRACTS OF JAPAN vol. 6, no. 218 (E-139)(1096) 2 November 1982 & JP-A-57 123 785**
- **GRUNDIG TECHNISCHE INFORMATIONEN vol. 31, no. 3, 1984, FURTH DE pages 144 - 150 G. REIME 'Der Chromabaustein der neuen VHS-Recorder'**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

EP 0 476 922 B1

## Description

The present invention relates to frequency signal processing, and more particularly to a technique suitable for application to a signal processing circuit of a home video cassette tape recorder (VTR or VCR) for generating a carrier signal necessary for band conversion of a color signal to be recorded or reproduced.

A color signal of a home VCR is recorded after the frequency band of the color signal is converted to a lower frequency band of an FM modulated luminance signal. In a VCR of a PAL system in which the lower-band converted color signal carrier frequency is 40 1/8 x $f_H$ or 40.125 $f_H$ (where $f_H$ is a horizontal synchronizing signal), the frequency of a carrier signal necessary for band conversion is $f_{SC}$ + 40.125 $f_H$ (where $f_{SC}$ is a color sub-carrier frequency of a television video signal). The numerical value 40.125 is represented by 321/8.

A conventional VCR signal processing circuit which generates a carrier signal $f_{SC}$ + 40.125 $f_H$ has been disclosed in JP-A-57-123785. In the disclosed circuit, n x 40.125 $f_H$ is divided by n to generate a 4-phase signal including four 40.125 $f_H$ signals the phases of which are different by 90° from each other. Two 40.125 $f_H$ signals having a phase difference of 90° therebetween are applied via low-pass filters (LPF's) to two frequency converters. Also applied to the two frequency converters are two signals generated by a crystal oscillator of $f_{SC}$ and having a phase difference of 90° therebetween. The outputs of the two frequency converters are synthesized to generate a carrier signal $f_C$ + 40.125 $f_H$. In another circuit as has been disclosed by the Institute of Television Engineers of Japan (ITEJ), Technical Report Vol. 12, No. 17, pp. 1 to 6, TEBS' 88-8 by the present inventors, a signal from a voltage-controlled oscillator (VCO) is frequency-divided to generate a one-phase or single-phase 40.125 $f_H$ component. After the single-phase 40.125 $f_H$ component has been passed through an LPF and frequency-converted with an $f_{SC}$ signal, only an $f_{SC}$ + 40.125 $f_H$ component is extracted to generate a 4-phase signal including four signals having a frequency of $f_{SC}$ + 40.125 $f_H$ and a phase difference of 90°. A signal processing circuit of this type is shown in the block diagram of Fig. 10 of the present application. A signal having a frequency of 321 $f_H$ generated by a voltage-controlled oscillator (VCO) 160 is frequency-divided by a 1/321 frequency divider 161 and inputted to a phase comparator 162 which compares the phase (frequency) of the 321 $f_H$ signal with that of a horizontal synchronizing signal $f_H$. The phase comparison result is supplied to an LPF 163 to obtain a d.c. control signal for controlling VCO 160, to thereby control the oscillation output of VCO 160 in synchronization with the horizontal synchronizing signal $f_H$.

The output signal of VCO 160 is frequency-divided by a 1/8 frequency divider 164 to generate a frequency of 321/8 (= 40.125) $f_H$ which is then supplied to a sub-frequency converter 166 via an LPF 165. A color sub-carrier signal $f_{SC}$ obtained from an $f_{SC}$ fixed crystal oscillator 167 is also supplied to the sub-frequency converter 166. The sub-frequency converter 166 outputs two frequency components $f_{SC}$ + 40.125 $f_H$ and $f_{SC}$ - 40.125 $f_H$. A band-pass filter (BPF) 168 extracts only the frequency component of $f_{SC}$ + 40.125 $f_H$, and supplies it to a four-phase signal generator 169. The four-phase signal generator 169 generates a four-phase signal including four signals having a phase difference of $\pi/2$. One of the four signals selected by using a phase shift control signal including control signals 1 and 2 is sent to a main-frequency converter 170. The main-frequency converter 170 converts the sub-carrier frequency $f_{SC}$ of an inputted color signal to a frequency of 40.125 $f_H$ to generate a recording color signal.

The above-mentioned signal processing circuit includes the sub-frequency converter 166 for multiplying the sub-carrier frequency $f_{SC}$ by 40.125 $f_H$, and the low-pass filter (LPF) 165 for reducing harmonics of the 40.125 $f_H$ signal of a rectangular waveform. Outputs of the 40.125 $f_H$ signal generating circuitry 160 to 164 and the frequency converter 166 contain unnecessary signal components including frequencies of $l * 40 f_H$ ($l$ is an integer equal to or greater than 2) and $m * f_{SC} \pm n \times 40.125 f_H$ ($m$ is an integer equal to or greater than 1, and $n$ is an integer equal to or greater than 2). LPF 165 is provided on the output side of the 1/8 frequency divider 166, and BPF 168 is provided on the output side of the sub-frequency converter 166, in order to eliminate those unnecessary signal components. However, complete elimination of the undesired signal components is impossible. Also, there is a fear that the unnecessary signal components may have crosstalk with another circuit block on an integrated circuit through power supply lines, ground lines and so on, thereby deteriorating a signal-to-noise (S/N) ratio.

A preferred embodiment of the present invention may provide a frequency signal processing circuit for a video signal recording/reproducing apparatus capable of improving a signal-to-noise (s/n) ratio while using a simple circuit configuration.

A preferred embodiment of the present invention may provide a frequency signal processing circuit for a VCR or a VHS PAL system or NTSC 8 mm video system, which is free from unnecessary harmonics and easy to be implemented as an IC.

According to one aspect of the present invention, which is applicable to a video signal recording/reproducing apparatus of a type in which a color signal is down-converted to lower-frequency signals of different phases for recording/reproducing in synchronization with a horizontal synchronizing signal, a video signal processing circuit for generating a signal such as a color carrier signal for frequency conversion, including a phase locked loop, is provided.

The signal processing circuit comprises

a voltage-controlled oscillator (VCO) having a free-running frequency substantially equal to, or an integer multiple of, a sum frequency ($f_C$) of a first frequency ($f_{SC}$) and a synchronizing frequency ($f_H$) of a synchronizing signal, multiplied by (X ± l/Y) (wherein X and Y are predetermined integers); and

a phase locked loop (PLL) for receiving a first input signal ($f_C$, $2f_C$) from the VCO and a second input signal ($f_{SC}$, $2f_{SC}$)from a further oscillator, the second input signal having the first frequency ($f_{SC}$) or a frequency ($2f_{SC}$) two times as high as the first frequency, and the PLL being arranged to output a control signal to be supplied to a control terminal of the VCO;

the PLL comprising:

a phase shifter, one or more subtraction circuits, and a selector which are arranged in combination to output sequentially a series of Y subtraction signals each having a frequency corresponding to a difference between the sum frequency ($f_C$) and the first frequency ($f_{SC}$) and a phase delayed by $2\pi/Y$ from the previous signal in the series;

a frequency divider for sequentially receiving said subtraction signals and frequency dividing each said signal by 1/X;

a phase detector for receiving a signal outputted from said frequency divider and said synchronizing signal ($f_H$); and

a low-pass filter for receiving a signal outputted from said phase detector and generating said control signal to be supplied to the control terminal of said VCO.

Variants of the PLL are set forth in claims 1-8.

The circuit of the invention can be constructed in the following manner.

An output signal of a voltage-controlled oscillator (VCO) is frequency-divided to generate a four-phase signal including four kinds of signals having a phase different by 90° from each other. The VCO has a free-running frequency substantially equal to, or integer multiple of, a sum of a television color subcarrier frequency $F_{SC}$ of a VHS PAL system or NTSC 8 mm video system and a horizontal synchronizing frequency $f_H$ multiplied by 40.125 or 47.25. Eight or four kinds of signals having the subcarrier frequency $f_{SC}$ and a phase different by $\pi/4$ or $\pi/2$ from each other are produced from the subcarrier frequency $f_{SC}$. The eight or four kinds of signals are sequentially selected at each one period of the horizontal synchronizing signal $f_H$, the sequentially selected eight or four kinds of signals each having a phase advanced by $\pi/4$ or $\pi/2$ from the previously selected one. The selected signal and the corresponding four-phase signal are inputted to a delayed flip-flop (D-FF) which in turn generates a difference or subtraction result between the two inputted signals. This subtraction signal is frequency-divided to the horizontal synchronizing frequency $f_H$. The phase of the obtained frequency-divided signal is compared with the phase of the horizontal synchronizing frequency $f_H$ by a phase comparator. The phase difference therebetween is fed back to the VCO via a low-pass filter. The output of the VCO provides a signal for processing an object to be processed such as a carrier signal for a video signal to be processed. It is through frequency-division and phase-switching used to frequency-convert a color signal to be recorded or reproduced.

With the circuit arrangement described above, the carrier signal $f_C$ is generated through frequency-division. Therefore, a sub-frequency converter which executes a multiplication operation is not required, so that unnecessary harmonics will not be generated, dispensing with a band-pass filter and resulting in a simplified circuit.

## BRIEF DESCRIPTION OF THE DRAWINGS

Figs. 1A and 1B are functional block diagrams of a VCR having a carrier signal processing circuit for a color signal to be recorded or reproduced, according to the present invention;

Fig. 1C is a block diagram of a VCR signal processing circuit according to an embodiment of the present invention;

Fig. 1D illustrates an principle of the phase shifter shown in Fig. 1C;

Fig. 2A shows waveforms used for explaining the operation of a PLL circuit and a selector circuit;

Fig. 2B shows waveforms used for explaining the operation of a phase-shifting circuit;

Fig. 2C shows waveforms used for explaining the operation of frequency subtraction;

Fig. 3 is a block diagram of a VCR signal processing circuit according to another embodiment of the present invention;

Fig. 4 is a block diagram of a VCR signal processing circuit according to a further embodiment of the present invention;

Fig. 5 is a block diagram of a VCR signal processing circuit according to a still further embodiment of the present invention;

Fig. 6 is a block diagram of a VCR signal processing circuit according to another embodiment of the present invention;

Fig. 7 is a block diagram of a VCR signal processing circuit for a 8 mm video camera;

Fig. 8 is a circuit diagram sowing an embodiment of the frequency divider;
Fig. 9 shows waveforms used for explaining the operation of the frequency divider; and
Fig. 10 is a block diagram of a conventional VCR signal processing circuit.

Several embodiments of the present invention will be described with reference to the accompanying drawings.

Fig. 1A is a circuit diagram showing the structure of a video signal recording system (mode) of a VCR according to an embodiment of the present invention.

In Fig. 1A, reference numeral 1 represents an input terminal to which a video signal to be recorded is applied, reference numeral 2 represents a low-pass filter (LPF), reference numeral 3 represents a non-linear emphasis circuit, reference numeral 4 represents a pre-emphasis circuit, reference numeral 5 represents frequency modulation circuit, reference numeral 6 represents a high-pass filter (HPF), reference numeral 7 represents a band-pass filter (BPF), reference numeral 8 represents a frequency converter, reference numeral 9 represents an LPF, reference numeral 10 represents an adder, reference numeral 11 represents a record signal amplifier, and reference numeral 12 represents a recording magnetic head. In a signal processing circuit for an 8 mm VCR, an emphasis circuit 27 for burst signal emphasis and chroma signal emphasis is provided between the BPF 7 and the frequency converter 8. As well known in a VHS VCR circuit, in the recording operation, a luminance signal separated from a video signal inputted to the terminal 1 passes through the circuit blocks 2 to 6 to be subject to non-linear emphasis and FM modulation. On the other hand, a color signal separated from the inputted video signal passes through the circuit blocks 7 to 9 to be subject to lower-band conversion. The luminance signal and the color signal are then added together by the adder 10 and recorded in a recording medium by the recording head 12.

Fig. 1B is a circuit block diagram showing the structure of a reproducing system (mode) of a VCR according to an embodiment of the present invention.

In Fig. 1B, a reference numeral 14 represents a magnetic head for reproducing a recorded video signal, a reference numeral 15 represents a head signal amplifier, a reference numeral 16 represents an HPF, a reference numeral 17 represents a luminance signal FM demodulator, a reference numeral 18 represents a de-emphasis circuit, a numeral 19 represents a non-linear de-emphasis circuit, a numeral 20 represents a noise cancellation circuit, a numeral 21 represents an LPF, a numeral 22 represents a frequency converter, a numeral 23 represents a BPF, a numeral 24 represents a comb filter, a numeral 25 represents a signal adder, and a numeral 26 represents an output terminal from which a reproduced video signal is outputted. In an 8 mm VCR system, a chroma-signal de-emphasis circuit 28 is provided between the filter 24 and the signal adder 28. In the reproducing operation, a composite reproduced signal picked up by the reproducing head 14 from the recording medium is amplified by the amplifier 15. Thereafter, the reproduced luminance FM signal is demodulated by the circuits blocks 16 to 20, and the horizontal synchronizing signal $f_H$ is extracted from the demodulated luminance signal, the signal $f_H$ being used when generating the carrier color signal. On the other hand, a lower-band converted color signal is extracted from the reproduced signal by the LPF 21, and frequency-converted into a color signal having the subcarrier frequency by the frequency converter 22. The obtained color signal passes through the BPF 23 and comb filter 24 to eliminate unnecessary frequency components generated by frequency conversion. Thereafter, the color signal and the luminance signal is added together by the adder 25 to obtain a reproduced video signal which is then outputted from the output terminal 26.

The VCR color signal processing circuit described in Figs. 1A and 1B can be realized as an IC in the manner disclosed in the above-cited ITEJ Technical Report by the present inventors. Such an IC for the color signal processing circuit is implemented basically on a one-chip semiconductor substrate having circuit elements excluding HPF 6 and amplifier 11. A method of integrating such circuit elements is disclosed, for example, in Japanese Patent Application 1-157491 filed by the present applicant on June 19, 1989, and in Korean Patent Application No. 493/90 filed January 17, 1990 corresponding to US-5323242.

Fig. 1C is a block diagram of a VCR signal processing circuit according to an embodiment of the present invention. This circuit is called a carrier signal generating circuit which is applied to the frequency converter circuit blocks 8 and 22 shown in Figs. 1A and 1B. Main circuit blocks shown in Fig. 1C excluding, not exclusively, externally provided circuit blocks such as filters and oscillators, may be formed on a single monolithic semiconductor body such as monocrystal silicon by using a known semiconductor IC manufacturing technique.

The present inventors have paid attention to the following fact. The color subcarrier frequency $f_{SC}$ for a PAL system television is represented by $f_{SC}$ = 1135 $f_H$/4 + 25 Hz (horizontal synchronizing frequency $f_H$ = 15625 Hz, 25 Hz = $f_H$/625 Hz). In some VCR, the carrier signal frequency $f_C$ used for frequency conversion to or from 40.125 $f_H$ is represented by $f_C = f_{SC} + 40.125\ f_H$. The carrier frequency is therefore represented by the following equation (1).

$$f_C = f_{SC} + 40.125\ f_H$$

$$= 1135\ f_H/4 + f_H/625 + 321\ f_H/8$$

$$= 1295.5\ f_H/4 + f_H/625 \quad (1)$$

The present inventors have considered that a signal 2N (N is a positive integer) times as high as the carrier signal $f_C$ is generated by a voltage-controlled oscillator, and it is synchronized with the horizontal synchronizing signal by a PLL loop. In this manner, the carrier signal $f_C$ can be directly obtained without generating the harmonics of 40.125 $f_H$, and without using a frequency converter having a multiplication circuit.

A voltage-controlled oscillator (hereinafter simply called a VCO) 31 is designed to have a free-running frequency substantially two times as high as the carrier frequency $f_C$, although it is not exclusive.

An output signal from VCO is frequency divided by 1/2 by an 1/2 frequency divider 32. This frequency division makes the carrier frequency $f_C$. The frequency divider 32 includes, not exclusively, a through-latch circuit of an ECL type to be described later, and frequency-divides the input signal into four four-phase signals having a phase different by 90° from each other.

Four carrier signals $f_C$ generated by such frequency division and phase shift operation are sequentially selected by a switching circuit 33 switched synchronously with the head changeover signal and horizontal synchronizing signal, and supplied to a frequency converter 34.

There is provided a PLL loop in order to correctly synchronize the carrier signal $f_C$ with the horizontal synchronizing signal contained in a recording signal R.

In this PLL loop, a frequency-divided signal from the frequency divider 32 is supplied to a clock terminal C of a D-type flip flop (hereinafter simply called a DFF) 35. A color subcarrier frequency $f_{SC}$ of about 4.43 MHz is generated by a crystal oscillator 30 and supplied to a data terminal D of DFF 35. DFF 35 picks up the color subcarrier frequency $f_{SC}$ of about 4.43 MHz synchronously with the rising edge of the carrier frequency of about 5.06 MHz. Therefore, a phase (frequency) difference between these two higher and lower frequencies can be obtained from an output terminal Q. Such a subtraction operation by DFF 35 is represented by the following equation (2).

$$f_C - f_{SC} = 5.06\ \text{MHz} - 4.43\ \text{MHz}$$

$$= 2591\ f_H/8 + f_H/625$$

$$- 2270\ f_H/8 - f_H/625$$

$$= 321\ f_H/8\ (= \text{about } 0.63\ \text{MHz}) \quad (2)$$

The carrier frequency 2591 $f_H/8$ may be frequency-divided by 8/2591 using a frequency divider. However, in this case, the frequency division operation by 8/2591 results in a complicated and large circuit. According to the present embodiment, a frequency subtraction circuit or DFF 35 allows to considerably simplify the frequency divider within the PLL loop. An output of DFF 35 is frequency-divided by 1/40 by an 1/40 frequency divider 36, and inputted to a phase detector 37 as one input thereof. To the other input of the phase detector 37, the horizontal synchronizing signal $f_H$ separated from the recording signal R to be recorded is inputted. The comparison result is supplied to VCO 31 via a low-pass filter LPF 38.

A frequency divider provided within the PLL loop may frequency-divide an output from VCO 31 by a frequency division ratio of 1/40.125 (8/321) to obtain a frequency substantially the same as the horizontal synchronizing signal $f_H$.

However, it would be quite difficult to implement a frequency divider for frequency division by 1/40.125 because of needing a complicated and large circuit. It can be considered that the subtraction output is sampled every eighth time and the sampled output is subject to phase comparison. This approach poses a problem of less stability of the PLL operation.

These problems are solved by the present embodiment. The color subcarrier signal $f_{SC}$ generated by the crystal oscillator 30 is supplied to a phase shifter 39 to generate eight signals having a phase different by $\pi/4$ from each other. The eight signals are sequentially selected by a selector 40 and supplied to DFF 35.

The phase shifter 39 may use the circuit described in the above-cited ITEJ Technical Report or Japanese Patent Application No. 1-6023 (JP-A-2-188087 laid open July 24, 1990). For example, using an input vector signal $\vec{A}$, another vector signal $\vec{B}$ delayed by 45° is generated. Then, these vector signals are processed to obtain vector signals $\vec{A} - \vec{B}$, $-\vec{B}$, $-\vec{A} - \vec{B}$ as shown in Fig. 1D. In this manner, four four-phase vector signals $\vec{B}$, $-\vec{B}$, $\vec{A} - \vec{B}$, and $-\vec{A} - \vec{B}$ can be obtained.

The selector 40 sequentially selects the color subcarrier signals having a phase different by $\pi/4$ from each other, one signal for each horizontal period, at the time period other than the sampling period of the horizontal synchronizing signal $f_H$, upon reception of a selection signal generated by a selection signal generator 42. The selection signal generator 42 generates the selection signal in response to, although not exclusive, the horizontal synchronizing signal $f_H$ separated from the recording signal R to be recorded and delayed by a delay circuit 41. By sequentially selecting the eight signals each advancing by $\pi/4$ in phase from that of a previous one, an equivalent frequency division operation by 40.125 is realized by forty times of count (division) operations. In this manner, a frequency division of 8/321 can be realized using sets of eight horizontal synchronizing signals $f_H$ or eight horizontal periods.

At the frequency converter 34, the carrier signal $f_C$ from the frequency divider 32 and the color subcarrier signal contained in the recording signal are synthesized, and the lower-band converted signal is supplied to a recording video amplifier RA via an LPF 43.

In the PLL loop of a reproducing mode, a signal P to be reproduced is inputted to the frequency converter 34 via a terminal PB of a switch SW1. The signal outputted from the frequency converter 34 is supplied, via a band-pass filter 44, phase detector 45, low-pass filter LPF 46, and switch SW2, to VCO 31. The eight color subcarrier signals $f_{SC}$ from the selector 40 having a phase different by $\pi/4$ from each other are sequentially supplied to one input terminal of the phase detector 45. An output of VCO 31 is supplied to the 1/2 frequency divider 32 and the switching circuit 33 and to the frequency converter 34. The output from the frequency converter is supplied, as shown in Fig. 1B, to the output terminal 26 via BPF 22, comb filter 24, and chroma/de-emphasis circuit 28.

If the signal processing circuit of Fig. 10 is to be used for a luminance/color signal one-chip VCO control system of NTSC, there is provided, in the recording loop, a loop for discriminating an output frequency of DFF 35. This loop includes an 1/12 frequency divider 47 for frequency-dividing the horizontal synchronizing frequency $f_H$ contained in the recording signal R, a frequency discriminator counter 48, and an LPF 49. The discriminator 48 detects a frequency difference between the output from DFF 35 and the output from the frequency divider 47, and generates a frequency difference correcting signal which is supplied to VCO 31 via the LPF 49.

Fig. 2A shows signal waveforms used for explaining the operation of the selector 40. Fig. 2B shows eight signals A to H from the phase shifter 39 having a phase different by $\pi/4$ from each other.

Referring to Fig. 2A, the period between the first horizontal synchronizing signal to the second one is ⅛ $f_H$. If the color subcarrier signal $f_{SC}$ (signal A) from the crystal oscillator 30 only is used and the output of DFF 35 is frequency-divided by 1/40, the frequency-divided signal $f_D$, becomes a signal having a phase advanced by $\pi/4$ from that of the 40.125 $f_H$ components of the horizontal synchronizing signal $f_H$, so that the frequency-divided signal $f_D$, cannot synchronize with the horizontal synchronizing signal $f_H$. For this reason, the phase shifter 39 and selector 40 are used. During the 1/40 frequency division, the signal A is switched to signal B having a phase advanced by $\pi/4$ of the 40.125 $f_H$ components from that of the signal A. With such an arrangement, the frequency division operation by 1/40 is correctly performed, with the second horizontal synchronizing signal $f_H$ having substantially the same phase as that of the frequency-divided signal $f_D$.

Similarly, during the period from the second and third horizontal synchronizing signals $f_H$, the signal B is switched to signal C having a phase advanced by $\pi/4$ from that of the signal B. Fig. 2B shows the eight subcarrier signals A to H generated by the phase shifter 39 and selected by the selector 40, during one cycle of the frequency division operation for obtaining the frequency-divided output $f_D$.

By sequentially selecting the outputs from the phase shifter 39, it is possible to obtain the frequency subtraction outputs delayed by $\pi/4$ as shown in Fig. 2C. Fig. 2C shows the subtraction outputs $f_C$ - A and $f_C$ - B by way of example, the signals A and B being generated by the phase shifter 39. Specifically, the signals A and B generated by the phase shifter 39 are picked up at the positive edges (rising edges) of the carrier signal to obtain an output signal corresponding to the phase (frequency) difference and delayed by $\pi/4$ in phase. A frequency-divided output in synchronism with the horizontal synchronizing signal $f_H$ can thus be obtained. A phase comparison operation is conducted each time the horizontal synchronizing frequency $f_H$ is supplied.

The frequency-divided output signal and the horizontal synchronizing signal $f_H$ contained in the recording signal R are supplied to the phase detector 37 for the phase comparison operation. The horizontal synchronizing signal $f_H$ is separated from the recording signal R by a synchronizing signal separator (not shown). The phase comparison operation of the phase detector 37 generates a detection signal corresponding to the phase (frequency) difference. The detection signal is converted into a d.c. signal by the low-pass filter LPF 38 and supplied to the control terminal of VCO 31 via the switch SW2 connected to the recording REC side. With the PLL loop described above, the carrier signal $f_C$ correctly in synchronization with the horizontal synchronizing signal $f_H$ contained in the recording signal to be recorded can be generated without adversely influencing the pull-in characteristic of the PLL loop.

The color subcarrier signal within the recording signal R is supplied via the REC terminal of the switch SW1 to the frequency converter 34 whereat it is synthesized with the carrier signal to obtain the lower-band converted color signal having a frequency of about 629 KHz corresponding to the difference between the color subcarrier signal and the carrier signal. The lower-band converter color signal is then inputted to the recording amplifier RA via the low-pass filter LPF 43.

In Fig. 1C, the signal processing circuit for the reproducing mode is also shown.

In the reproducing mode, the frequency conversion operation is carried out in the reverse manner. In the reproducing (play-back) mode, the switch SW1 is connected to the PB terminal side. The frequency converter 34 synthesizes the carrier signal of about 5.06 MHz with the lower-band converted color signal of about 629 KHz to be frequency-converted to a signal having a frequency of about 4.43 MHz corresponding to the frequency difference between the carrier signal and the lower-band converted color signal. The band converted color signal is passed through BPF 44 to extract the color subcarrier component which is then supplied to the phase detector 45. This phase detector compares the phase of the color subcarrier component with that of the reference frequency signal of 4.43 MHz. A detection signal having a passe (frequency) difference and obtained by the phase comparison is supplied to LPF 45 to obtain a d.c. signal. This d.c. signal is supplied to the control terminal of VCO 31 via the switch SW2 connected to the reproducing side terminal PB. With the PLL loop for the reproducing mode described above, it is possible to generate the carrier signal correctly in synchronization with the reference frequency signal generated by the crystal oscillator 30. In this reproducing mode, the selector 40 selects the reference frequency signal of 4.43 MHz directly from the crystal oscillator 30.

Fig. 8 is a circuit diagram of the 1/2 frequency divider 32 which performs the 1/2 frequency division and generates the four four-phase signals. This circuit is applicable, as the two-inputs four four-phase outputs circuit, to other 1/2 frequency dividers 32 for supplying four four-phase signals to the frequency converters 34 in other embodiments.

In this circuit, two through-latch circuits of an ECL structure are used for performing the 1/2 frequency division and generating the four-phase signal.

Transistors Q6 and Q7 whose collectors and bases are cross-coupled constitute a latch circuit. Each collector of the differential transistors Q6 and Q7 is connected to the collector of a corresponding one of input differential transistors Q5 and Q8. Loads R1 and R2 are connected to the two common collectors. The common emitters of the differential transistors Q6 and Q7 of a latch connection and of the input differential transistors Q5 and Q8 are connected to a constant current source Io via differential transistors Q1 and Q2, respectively. These circuit elements constitute a first through-latch circuit FF1.

Similar to the first through-latch circuit FF1, a second through-latch circuit FF2 is constituted by differential transistors Q10 and Q11 of a latch connection, input differential transistors Q9 and Q12, collector loads R3 and R4, a constant current source Io, and switching differential transistors Q3 and Q4. The bases of the input differential transistors Q5 and Q8 of the first through-latch circuit FF1 are supplied with the output signals of the second through-latch circuit FF2 in a cross-couple manner, and vice versa.

The bases of the switching differential transistors Q1, Q2, Q3, and Q4 are supplied with signals of opposite polarities obtained from a signal to be frequency-divided. Specifically, an input terminal IN1 is connected to the base of the transistor Q1 for providing a through-input operation of the first through-latch circuit FF1, and to the base of the transistor Q3 for providing a latch operation to the second through-latch circuit FF2. An input terminal IN2 is connected to the base of the transistor Q2 for providing a latch operation to the first through-latch circuit FF1, and to the base of the fourth transistor Q4 for providing a through-input operation to the second through-latch circuit FF2.

Signals of opposite polarities obtained from a signal to be frequency-divided are supplied to the input terminals IN1 and IN2. If an oscillator output circuit is of a double-ended configuration, signals of opposite polarities are supplied to the input terminals IN1 and IN2. If a oscillator output circuit is of a single-ended configuration, an oscillator output is supplied to the input terminal IN1 (or IN2), and a middle point potential of the oscillator output is supplied to the input terminal IN2 (or IN1).

In this circuit, the signals across the load resistors R1 to R4 of the two through-latch circuits FF1 and FF2 are supplied to emitter follower circuits constructed of transistors Q13 to Q16 and constant current sources Io to output four four-phase signals having a phase different by 90° from each other.

It is to be noted that the same symbol Io used for the constant current sources is not intended to mean that the same current is supplied from each constant current source, but the symbol Io is used for representing a general constant current source.

The operation of the particular circuit shown in Fig. 8 will be described with reference to the waveforms shown in Fig. 9.

In Fig. 9, a signal from an oscillator of a single-ended type is supplied to the input terminal IN1, and a middle point potential of the oscillator output signal is supplied to the input terminal IN2.

During the period while the oscillator output signal supplied to the input terminal IN1 is lower than the reference middle point potential, the transistors Q2 and Q4 are maintained ON. Therefore, in the first through-latch circuit FF1, the differential transistors Q6 and Q7 in a latch connection are supplied with a constant current from the constant current source Io to hold the latched input signal. For example, if the transistor Q6 is ON, the constant current flows through the load resistor R1, so that the corresponding output terminal OUT 4 takes a low level. If the transistor Q7 is OFF, the corresponding output terminal OUT 1 takes a high level.

In the second through-latch circuit FF2 with the transistor Q4 being ON, the input differential transistors Q9 and Q12 are activated. The input transistor Q9 then becomes ON because it receives a high level output from the OFF transistor Q7 in the first through-latch circuit FF1. The input transistor Q12 on the other hand becomes OFF because it receives a low level output from the ON transistor Q6. Therefore, a constant current flows through the load resistor R3. A constant current will not flow through the load resistor R4 so that a high level, e.g. a power source voltage Vcc, appears across the load resistor R4. Accordingly, the output signal at the output terminal OUT 2 takes a low level, and the output signal at the output terminal OUT 3 takes a high level.

As the oscillator output signal supplied to the input terminal IN1 becomes higher than the reference middle point potential, the transistors Q2 and Q4 are turned OFF and the transistors Q1 and Q3 are turned ON. Therefore, in the second through-latch circuit FF2 with the transistor Q3 being ON, the differential transistors Q10 and Q11 in a latch connection are supplied with a constant current from the constant current source Io to hold the latched input signal. Specifically, the transistor Q10 is latched to an ON state in accordance with the ON state of the input transistor Q9, and the transistor Q11 is latched to an OFF state in accordance with the OFF state of the input transistor Q12. Therefore, the output terminal OUT 2 is maintained at the low level, and the output terminal OUT 3 is maintained at the high level.

In the first through-latch circuit FF1 with the transistor Q1 being OFF, the input differential transistors Q5 and Q6 are activated. The input transistor Q8 then becomes ON because it receives a high level output from the OFF transistor Q11 in the second through-latch circuit FF2. The input transistors Q5 on the other hand becomes OFF because it receives a low level output from the ON transistor Q10. Therefore, a constant current flows through the load resistor R2 instead of the load resistor R1, reversing the above-described latched signals. Namely, the output signal at the output terminal OUT 4 changes from a low level to a high level, and the output signal at the output terminal OUT 1 changes from a high level to a low level.

As the oscillator output signal supplied to the input terminal IN1 becomes again lower than the reference middle point potential, the transistors Q1 and Q3 are turned OFF and the transistors Q2 and Q4 are turned ON. Therefore, in the first through-latch circuit FF1 with the transistor Q2 being ON, the differential transistors Q6 and Q7 in a latch connection are supplied with a constant current from the constant current source Io to hold the latched input signal. Specifically, the transistor Q7 is latched to an ON state in accordance with the ON state of the input transistor Q8, and the transistor Q6 is latched to an OFF state in accordance with the OFF state of the input transistor Q5. Therefore, the output terminal OUT 4 is maintained at the low level, and the output terminal OUT 1 is maintained at the high level.

In the second through-latch circuit FF2 with the transistor Q3 being ON, the input differential transistors Q9 and Q10 are activated. The input transistor Q12 then becomes ON because it receives a high level output from the OFF transistor Q6 in the first through-latch circuit FF1. The input transistor Q9 on the other hand becomes OFF because it receives a low level output from the ON transistor Q7. Therefore, a constant current flows through the load resistor R4 instead of the load resistor R3, reversing the above-described latched signals. Namely, the output signal at the output terminal OUT 2 changes from a low level to a high level, and the output signal at the output terminal OUT 3 changes from a high level to a low level.

In the above manner, it is possible to output four signals from the output terminals OUT 1 to OUT 4, each having a period two times as longer as the period of the oscillation frequency of the input signal IN1, in other words, each being obtained by frequency-dividing the oscillation frequency by 1/2. In addition, as seen from Fig. 9, the two through-latch circuits FF1 and FF2 output four signals, the signal at OUT 4 being delayed by 90° in phase from the signal at OUT 2, the signal at OUT 1 being delayed by 90° in phase from the signal at OUT 2, and the signal at OUT 1 being delayed by 90° in phase from the signal at OUT 1.

Use of such a frequency divider made of through-latch circuits of an ECL structure allows to realize a circuit of simple structure having both the frequency division function and the phase shift function.

Fig. 3 is a block diagram of a signal processing circuit for a VCR according to another embodiment of the present invention. In Fig. 3, this circuit is shown as used in the recording mode, being connected to a frequency converter having input and output terminals R1 and R0, so the circuit elements and switches used for the reproducing mode are omitted. In this circuit arrangement, inverted and non-inverted outputs from each DFF are used to generate eight subtraction outputs having a phase different by $\pi/4$. A selector 60 sequentially selects the eight subtraction signals which are then frequency-divided by 1/40 to obtain a frequency-divided signal having substantially the same frequency as the horizontal synchronizing signal $f_H$. It is apparent that in Fig. 2C, the timing of switching each subtraction signal must be made in the similar manner as described above. The other circuit elements 50 to 54, 56 to 58, and 61 to 62 have the structure like that described with Fig. 1C.

Fig. 4 is a block diagram of a signal processing circuit for a VCR according to a further embodiment of the present invention. In Fig. 3, the main circuit elements of this circuit are shown in blocks as used in the recording mode.

In this embodiment, a crystal oscillator 70 generates a color subcarrier frequency of 2 $f_{SC}$. There are provided two DFF's 75-1 and 75-2 for performing the above-described subtraction operation, in correspondence with two output signals from a phase shifter 79 having a phase different by $\pi/2$ from each other. To each of DFF's 75-1 and 75-2, the color subcarrier frequency 2 $f_{SC}$ and the carrier signal 2 $f_C$ generated by a VCO 71 are supplied.

The frequency subtraction outputs having a phase different by $\pi/2$ from each other and outputted from the non-inverting and inverting terminals of DFF's 75-1 and 75-2 are frequency-divided by 1/2 by a corresponding one of frequency dividers 90-1 and 90-4, because the carrier signal frequency and the color subcarrier frequency are doubled as described above. Eight frequency subtraction signals having a phase different by $\pi/4$ from each other are generated as the outputs from the 1/2 frequency dividers 90-1 to 90-4 and the outputs from inverters N1 to N4 which invert (change the phase by $\pi/2$ of) the outputs from the 1/2 frequency dividers (changing the phase by $\pi/2$). The eight frequency subtraction signals are supplied to a selector 80. The other circuit blocks 72 to 74, 76n to 78, and 80 to 82 have the similar circuit structure like that described with Figs. 3 and 4.

Fig. 5 is a block diagram of a signal processing circuit for a VCR according to a still further embodiment of the present invention. In Fig. 5 also, the main circuit elements of this circuit are shown in blocks as used in the recording mode.

In this embodiment, a carrier signal 2 $f_C$ is supplied to a phase shifter 109 to generate two carrier signals having a phase different by $\pi/2$ from each other. There are provided two DFF's 105-1 and 105-2 for performing the above-described subtraction operation, in correspondence with the two carrier signals. A color subcarrier signal $2f_{SC}$ is supplied to each data terminal of DFF's 105-1 and 105-2. Circuits 115-1 to 115-4, N1 to N4, and 110 for generating eight frequency subtraction signals having a phase different by $\pi/4$ are the same as those of the embodiment shown in Fig. 4, so the description thereof is omitted.

Fig. 6 is a block diagram of a signal processing circuit for a VCR according to another embodiment of the present invention. This embodiment is a modification of the embodiment shown in Fig. 4. In generating eight frequency subtraction signals having a phase different by $\pi/4$ from each other, the embodiment shown in Fig. 4 generates the frequency subtraction signals each having a 50% duty ratio. In contrast, the embodiment shown in Fig. 6 generates the frequency subtraction signals each having a 25% duty ratio. A selector 120 selects at the same time two frequency subtraction signals having a phase difference of $\pi$ therebetween. The selected two signals are inputted to the set input S and reset input R of a set/reset flip-flop (SRFF) 121 to perform a wave shaping operation. For the operations described above, there are provided 1/2 frequency dividers 90-1 to 90-4 and inverters N1 to N4 similar to the above embodiment, and AND gates G1 to G8.

Fig. 7 is a block diagram showing a signal processing circuit for an NTSC 8 mm type VCR according to an embodiment of the present invention. Main circuit blocks shown in Fig. 7 excluding, not exclusively, externally provided circuit blocks such as filters and oscillators, may be formed on a single monolithic semiconductor body such as monocrystal silicon using a known semiconductor IC manufacturing technique.

The fundamental circuit arrangement shown in Fig. 7, particularly circuit blocks 130 to 143, is similar to that described with Fig. 1C. However, the lower-band converted color signal has a carrier frequency of 47.25 $f_H$ which is different from the PAL system. Therefore, a frequency divider 136 is constructed such that it frequency-divides an inputted signal by 1/47. A frequency subtraction circuit 135 made of a DFF and provided at the front stage of the frequency divider 136 generates an $f_H/4$ phase delay. A phase shifter 139 generates four carrier signals having a phase different by $\pi/2$. It can be understood by the person skilled in this field of technology that the circuit shown in Fig. 8 may be used as the phase shifter 139. With the circuit arrangement described above, the PLL loop can be realized in the same manner as the case of the PAL system. Also in the case of an 8 mm VCR, modifications shown in Figs. 3 to 6 may be used.

The advantageous effects of the above-described embodiments are as follows.

(1) A carrier signal processing circuit of the present invention includes a phase lock loop and is constructed in the following manner. An output signal of a voltage-controlled oscillator (VCO) is frequency-divided to generate a four-phase signal including four signals having a phase different by 90° from each other. The VCO has a free running frequency substantially equal to, or integer multiple of, a sum of a television color sub-carrier frequency $f_{SC}$ of a VHS PAL system (or NTSC 8 mm video camera system) and a horizontal synchronizing frequency $f_H$ multiplied by 40.125 (or 47.25). Eight (or four) signals having the sub-carrier frequency $f_{SC}$ and a phase different by $\pi/4$ (or $\pi/2$) from each other are generated from the sub-carrier frequency $f_{SC}$. The eight (or four) signals are sequentially selected at each one period of the horizontal synchronizing signal $f_H$, the sequentially selected eight signals (or four signals) each having a phase advanced by $\pi/4$ (or $\pi/2$) from the previously selected one. The selected signal and the corresponding four-phase signal from the VCO are subject to a subtraction operation. This subtraction signal is frequency-divided to a frequency substantially the same as the horizontal synchronizing frequency $f_H$. The phase of the obtained frequency-divided signal is compared with the phase of the horizontal synchronizing frequency $f_H$. In accordance with the phase comparison signal, a control signal for the VCO is generated. In the above manner, the carrier signal used for frequency conversion can be generated directly through frequency division without using a frequency converter having a multiplication circuit. As a result, unnecessary harmonics as in a conventional circuit will not be generated, dispensing with filters for eliminating such unnecessary harmonics and preventing adverse effects to other circuits.

(2) A D-type flip-flop is used as the frequency subtraction circuit for performing a subtraction operation between the carrier frequency and the color subcarrier frequency. Therefore, a PLL loop can be realized as having a simple circuit arrangement.

Although the present invention has been described in detail with reference to the preferred embodiments thereof, it is to be understood that the present invention is not limited thereto, but various modifications are possible without departing from the scope of the present invention. For example, the two sets of phase detector and low-pass filter constituting the PLL loops for the recording and reproducing modes shown in Figs. 1A and 1B may be replaced by a single set of the phase detector and low-pass filter to be used in common for the both modes. In such a case, the operation frequency of the phase detector is made to have a wider frequency range, and a switch is provided at the input side of the phase detector. The embodiment circuit shown in Figs. 1A to 1C may be implemented as a single semiconductor IC together with its peripheral circuits or as a plurality of semiconductor IC's.

The frequency of the VCO or crystal oscillator may be set to a desired frequency of integer multiple of the carrier signal or color subcarrier signal. In this case, a suitable frequency divider is used.

The present invention is applicable not only to a VCR signal processing circuit, but also to other various signal processing circuits.

## Claims

**1.** A signal processing circuit for a video signal recording/reproducing apparatus, comprising:

a voltage-controlled oscillator (VCO) (31,131) having a free-running frequency an integer multiple of a sum frequency ($f_C$) of a first frequency ($f_{SC}$) and a synchronizing frequency ($f_H$)of a synchronizing signal, multiplied by X ± l/Y, wherein X and Y are predetermined integers;
a first frequency divider (32, 132) having as its input the output from the VCO (31, 131); and
a phase locked loop (PLL) for receiving a first input signal ($f_C$) from the first frequency divider (32,132)and a second input signal ($f_{SC}$) from a further oscillator (30,130), the first input signal having the sum frequency ($f_c$), the second input signal having the first frequency ($f_{SC}$) and the PLL being arranged to output a control signal to be supplied to a control terminal of the VCO;

the PLL comprising:

a phase shifter (39,139) arranged to receive the second input signal ($f_{sc}$) and to generate Y signals having said first frequency ($f_{sc}$) and a phase different by 2π/Y from each other;
a selector (40,140) arranged to sequentially select said Y signals at each one period of the horizontal synchronizing signal ($f_H$), said sequentially selected Y signals each having a phase advanced by 2π/Y from the previously relevant selected one;
a subtraction circuit (35,135) arranged to calculate a difference between said signal selected by said selector and said first input signal ($f_c$) outputted from said first frequency divider, of a phase corresponding to that of said selected signal;
a second frequency divider (36,136) for sequentially receiving subtraction signals outputted from said subtraction circuit (35,135) and frequency dividing each said signal by X;
a phase detector (37,137) for receiving a signal outputted from said second frequency divider (36,136) and said synchronizing signal ($f_H$); and
a low-pass filter (38,138) for receiving a signal outputted from said phase detector (37,137) and generating said control signal to be supplied to the control terminal of said VCO (31,131).

**2.** A signal processing circuit according to claim 1, wherein the VCO (31) has a free running frequency an integer multiple of a sum frequency of a PAL television color subcarrier frequency ($f_{SC}$) and a horizontal synchronizing frequency ($f_H$) multiplied by 40.125, X = 40 and Y = 8.

**3.** A signal processing circuit according to claim 1, wherein the voltage-controlled oscillator (VCO) (131) has a free running frequency an integer multiple of a sum frequency of a television color subcarrier frequency ($f_{SC}$) and a horizontal synchronizing frequency ($f_H$) multiplied by 47.25, whereby X = 47 and Y = 4.

**4.** A signal processing circuit for a video signal recording/reproducing apparatus, comprising:

a voltage-controlled oscillator (VCO) having a free running frequency an integer multiple of a sum frequency of a PAL television colour subcarrier frequency ($f_{sc}$) and a horizontal synchronizing frequency ($f_H$)of a synchronizing signal, multiplied by 40.125;
a first frequency divider having as its input the output from the VCO; and

a phase locked loop (PLL) for receiving a first input signal ($f_c$) from the first frequency divider and a second input signal($f_{sc}$) from a further oscillator, the first input signal having the sum frequency ($f_c$), the second input signal having the colour subcarrier frequency ($f_{sc}$) and the PLL being arranged to output a control signal to be supplied to a control terminal of the VCO;

the PLL comprising:

a phase shifter arranged to receive the first input signal ($f_c$) and to generate eight signals having said frequency ($f_c$) and a phase different by $\pi/4$ from each other;
a selector arranged to sequentially select said eight signals at each one period of the horizontal synchronizing signal ($f_H$), said sequentially selected eight signals each having a phase delayed by $\pi/4$ from the previously selected one;
a subtraction circuit arranged to calculate a difference between said signal ($f_c$) selected by said selector and said second input signal having said colour subcarrier frequency ($f_{sc}$);
a second frequency divider for sequentially receiving subtraction signals outputted from said subtraction circuit and frequency dividing each said signal to output a signal having a frequency substantially the same as said synchronizing frequency ($f_H$) ;
a phase detector for receiving a signal outputted from said second frequency divider and said synchronizing signal ($f_H$); and
a low-pass filter for receiving a signal outputted from said phase detector and generating said control signal to be supplied to the control terminal of said VCO.

**5.** A signal processing circuit for a video signal recording/reproducing apparatus, comprising:

a voltage-controlled oscillator (VCO) (51) having a free running frequency an integer multiple of a sum frequency of a PAL television colour subcarrier frequency ($f_{sc}$) and a horizontal synchronizing frequency ($f_H$)of a synchronizing signal, multiplied by 40.125;
a first frequency divider (52) having as its input the output from the VCO; and
a phase locked loop (PLL) for receiving a first input signal ($f_c$) from the first frequency divider (52) and a second input signal ($f_{sc}$) from a further oscillator (50), the first input signal having the sum frequency ($f_c$), the second input signal having the colour subcarrier frequency ($f_{sc}$) and the PLL being arranged to output a control signal to be supplied to a control terminal of the VCO (51);

the PLL comprising:

a phase shifter (59) arranged to receive the second input signal ($f_{sc}$)and to generate four signals having said colour subcarrier frequency ($f_{sc}$) and a phase different by $\pi/4$ from each other;
four subtraction circuits (55-1 - 55-4) each arranged to calculate a difference between a respective one of said four signals and said first input signal ($f_C$) generated by said first frequency divider (52) and to provide two output signals having a phase different by $\pi$ from each other;
a selector (60) arranged to sequentially select the eight output signals from said subtraction circuits at each one period of the horizontal synchronizing signal ($f_H$), said sequentially selected eight signals each having a phase delayed by $\pi/4$ from the previously selected one;
a second frequency divider (56) for sequentially receiving subtraction signals selected by said selector (60) and frequency dividing each said signal to output a signal having a frequency substantially the same as said synchronizing frequency ($f_H$);
a phase detector (57) for receiving a signal outputted from said second frequency divider (56) and said horizontal synchronizing signal ($f_H$); and
a low-pass filter (58) for receiving a signal outputted from said phase detector (57) and generating said control signal to be supplied to the control terminal of said VCO (51).

**6.** A signal processing circuit for a video signal recording/reproducing apparatus,comprising:

a voltage-controlled oscillator (VCO) (71) having a free-running frequency an integer multiple of a sum frequency of a PAL television colour subcarrier frequency ($f_{SC}$) and a horizontal synchronizing frequency ($f_H$) multiplied by 40.125; and
a phase locked loop (PLL) for receiving a first input signal ($2f_c$) from the VCO (71) and a second input signal ($2f_{sc}$)from a further oscillator (70), the first input signal having a frequency two times as high as the sum frequency, the second input signal having a frequency ($2f_{sc}$) two times as high as the colour subcarrier frequency and the PLL being arranged to output a control signal to be supplied to a control terminal of the VCO (71);

the PLL comprising:

a phase shifter (79) arranged to receive the second input signal (2 $f_{sc}$) and to generate two signals having a frequency (2 $f_{sc}$) two times as high as said colour subcarrier frequency ($f_{sc}$) and a phase different by $\pi/2$ from each other;
two subtraction circuits (75-1, 75-2) each arranged to calculate a difference between a respective one of said two signals and said first input signal ($2f_C$) generated by said VCO (71) and provide two output signals, phase different by $\pi/2$ from one another;
four frequency divider circuits (90-1 - 90-4 and N1-N4) for frequency-dividing respective signals outputted from said two subtraction circuits by 2, each frequency divider circuit providing two output signals having a phase different by $\pi$ from each other;
a selector (80) arranged to sequentially select the eight output signals from said four frequency divider circuits at each one period of the horizontal synchronizing signal ($f_H$), said sequentially selected eight signals each having a phase delayed by $\pi/4$ from a previously selected relevant one;
a frequency divider (76) for sequentially receiving subtraction signals selected by said selector (80) and frequency dividing each said selected signal to output a signal having a frequency substantially the same as said synchronizing frequency ($f_H$) ;
a phase detector (77) for receiving a signal outputted from said frequency divider (76) and said synchronizing signal ($f_H$); and
a low-pass filter (78) for receiving a signal outputted from said phase detector (77) and generating said control signal to be supplied to the control terminal of said VCO (71).

**7.** A signal processing circuit according to claim 6, wherein the selector (120) is arranged to select two signals from said plurality of frequency divider circuits (90-1-90-4, N1-N4 and G1-G8) at each one period of the horizontal synchronizing signal ($f_H$), said two selected signals having a phase difference of $\pi$; and the selector further comprises a set/reset flip-flop (SRFF)(121)via which a signal is output to the frequency divider (76), the two selected signals being respectively inputted to the set and reset inputs of the SRFF.

**8.** A signal processing circuit for a video signal recording/reproducing apparatus,comprising:
a voltage-controlled oscillator (VCO)(101) having a free-running frequency an integer multiple of a sum frequency ($f_C$) of a PAL television colour subcarrier frequency ($f_{SC}$) and a horizontal synchronizing frequency ($f_H$), of a synchronizing signal multiplied by 40.125; and a phase locked loop (PLL) for receiving a first input signal ($2f_c$) from the VCO (101) and a second input signal ($2f_{sc}$) from a further oscillator (100), the first input signal having a frequency two times as high as the sum frequency, the second input signal having a frequency ($2f_{sc}$) two times as high as the colour subcarrier frequency, and the PLL being arranged to output a control signal to be supplied to a control terminal of the VCO (101);
the PLL comprising:

a phase shifter (109) arranged to receive said first input signal ($2f_C$) and to generate two signals having a frequency (2 $f_C$) two times as high as said sum frequency ($f_C$) and a phase different by $\pi/2$ from each other;
two subtraction circuits (105-1, 105-2) each arranged to calculate a difference between a respective one of said two signals and said second input signal ($2f_{SC}$) having a frequency twice said colour subcarrier frequency ($f_{SC}$), and to provide two output signals, phase different by $\pi/2$ from one another;
four frequency divider circuits (115-1 - 115-4 and N1-N4) for frequency-dividing respective signals outputted from said two subtraction circuits by 2, each frequency divider circuit providing two output signals having a phase different by $\pi/2$ from each other;
a selector (110) arranged to sequentially select the eight output signals from said four frequency divider circuits at each one period of the horizontal synchronizing signal ($f_H$), said sequentially selected eight signals each having a phase delayed by $\pi/4$ from the previously selected one;
a frequency divider (106) for sequentially receiving subtraction signals selected by said selector (110) and frequency dividing each said selected signal to output a signal having a frequency substantially the same as said synchronizing frequency ($f_H$);
a phase detector (107) for receiving a signal outputted from said frequency divider (106) and said synchronizing signal ($f_H$); and

a low-pass filter (108) for receiving a signal outputted from said phase detector (107) and generating said control signal to be supplied to the control terminal of said VCO (101).

**9.** A signal processing circuit according to any one of claims 1 to 8, wherein the or each subtraction circuit is constructed of a delayed-type flip-flop circuit having a clock input terminal to which said first input signal ($f_c$,$2f_c$) is supplied, and a data input terminal to which said second input signal ($f_{sc}$, $2f_{sc}$) is supplied.

**10.** A signal processing circuit according to any one of claims 1 to 9, wherein the selection operation of said selector is controlled by a selector signal generating circuit (42, 62, 82, 112, 142)to which said horizontal synchronizing signal ($f_H$) delayed by a predetermined phase is supplied.

**11.** A video signal recording/reproducing apparatus including a signal processing circuit according to any one of the preceding claims.

**Patentansprüche**

**1.** Signalverarbeitungsschaltung für eine Videosignal-Aufzeichnungs-/Wiedergabevorrichtung, aufweisend:

einen spannungsgesteuerten Oszillator (VCO) (31, 131) mit einer Freilauffrequenz, die ein ganzzahliges Vielfaches einer Summenfrequenz ($f_C$) einer ersten Frequenz ($f_{SC}$) und einer Synchronisationsfrequenz ($f_H$) eines Synchronisationssignals, multipliziert mit X ± 1/Y, wobei X und Y vorbestimmte ganze Zahlen sind, darstellt,
einen ersten Frequenzteiler (32, 132), dessen Eingabe eine Ausgabe des VCO (31, 131) ist, und
einen phasenverriegelten Schaltkreis (PLL-Schaltung) zum Empfang eines ersten Eingangssignals ($f_C$) von dem ersten Frequenzteiler (32, 132) und eines zweiten Eingangssignals ($f_{SC}$) von einem weiteren Oszillator (30, 130), wobei das erste Eingangssignal die genannte Summenfrequenz ($f_C$) und das zweite Eingangssignal die erste Frequenz ($f_{SC}$) darstellt und die PLL-Schaltung eingerichtet ist, ein Steuersignal zur Lieferung an einen Steueranschluß des VCO auszugeben,

wobei die PLL-Schaltung aufweist:

einen Phasenschieber (39, 139), um das zweite Eingangssignal ($f_{SC}$) zu empfangen und Y Signale der ersten, Frequenz ($f_{SC}$) und einer Phasendifferenz von $2\pi/Y$ voneinander zu erzeugen,
einen Wähler (40, 140), um zu den einzelnen Perioden des horizontalen Synchronisationssignals ($f_H$) die genannten Y Signale nacheinander auszuwählen, wobei die nacheinander ausgewählten Y Signale jeweils gegenüber dem zuvor relevant ausgewählten eine um $2\pi/Y$ vorlaufende Phase aufweisen,
eine Subtraktionsschaltung (35, 135), um eine Differenz zwischen dem von dem Wähler ausgewählten Signal und dem von dem ersten Frequenzteiler ausgegebenen ersten Eingangssignal ($f_C$) zu berechnen, deren Phase der des gewählten Signals entspricht,
einen zweiten Frequenzteiler (36, 136), um nacheinander von der Subtraktionsschaltung (35, 135) ausgegebene Subtraktionssignale zu empfangen und in ihrer Frequenz jeweils durch X zu teilen,
einen Phasendetektor (37, 137) zum Empfang eines von dem zweiten Frequenzteiler (36, 136) ausgegebenen Signals und des Synchronisationssignals ($f_H$), und
einen Tiefpaßfilter (38, 138) zum Empfang eines von dem Phasendetektor (37, 137) ausgegebenen Signals und zum Erzeugen des an den Steueranschluß des VCO (31, 131) zu liefernden Steuersignals.

**2.** Schaltung nach Anspruch 1, wobei der VCO (31) eine Freilauffrequenz aufweist, die ein ganzzahliges Vielfaches der Summenfrequenz einer PAL-Fernseh-Farbhilfsträgerfrequenz ($f_{SC}$) und einer mit 40,125 mulitplizierten horizontalen Synchronisationsfrequenz ($f_H$), mit X = 40 und Y = 8.

**3.** Schaltung nach Anspruch 1, wobei der spannungsgesteuerte Oszillator (VCO) (131) eine Freilauffrequenz aufweist, die ein ganzzahliges Vielfaches einer Summenfrequenz einer Fernseh-Farbhilfsträgerfrequenz ($f_{SC}$) und einer mit 47,25 multiplizierten horizontalen Synchronisationsfrequenz ($f_H$) darstellt, mit X = 47 und Y = 4.

**4.** Signalverarbeitungsschaltung für eine Videosignal-Aufzeichnungs-/Wiedergabevorrichtung, aufweisend:

einen spannungsgesteuerten Oszillator (VCO) mit einer Freilauffrequenz, die ein ganzzahliges Vielfaches einer Summenfrequenz einer PAL-Fernseh-Farbhilfsträgerfrequenz ($f_{SC}$) und einer horizontalen Synchronisationsfrequenz ($f_H$) eines Synchronisationssignals, multipliziert mit 40,125, darstellt,
einen ersten Frequenzteiler, dessen Eingabe eine Ausgabe des VCO ist, und
einen Phasenverriegelungsschaltkreis (PLL-Schaltung) zum Empfang eines ersten Eingangssignals ($f_C$) von dem ersten Frequenzteiler und eines zweiten Eingangssignals ($f_{SC}$) von einem weiteren Oszillator, wobei das erste Eingangssignal die Summenfrequenz ($f_C$) und das zweite Eingangssignal die Farbhilfsträgerfrequenz ($f_{SC}$) aufweist und die PLL-Schaltung so eingerichtet ist, daß sie ein Steuersignal zur Lieferung an einen Steueranschluß des VCO ausgibt,

wobei die PLL-Schaltung aufweist:

einen Phasenschieber, um das erste Eingangssignal ($f_C$) zu empfangen und acht Signale der genannten Frequenz ($f_C$) und einer um jeweils $\pi/4$ voneinander verschiedenen Phase zu erzeugen,
einen Wähler, um in den einzelnen Perioden des horizontalen Synchronisationssignals ($f_H$) nacheinander die genannten acht Signale auszuwählen, wobei die nacheinander ausgewählten acht Signale jeweils gegenüber dem vorangehend ausgewählten Signal eine um $\pi/4$ verzögerte Phase aufweisen,
eine Subtraktionsschaltung, um eine Differenz zwischen dem von dem Wähler gewählten Signal ($f_C$) und dem zweiten Eingangssignal mit der Farbhilfsträgerfrequenz ($f_{SC}$) zu berechnen,
einen zweiten Frequenzteiler, um nacheinander von der Subtraktionsschaltung ausgegebene Subtraktionssignale zu empfangen und jedes der Signale in seiner Frequenz zu teilen, um ein Signal mit im wesentlichen der Synchronisationsfrequenz ($f_H$) auszugeben,
einen Phasendetektor, um ein von dem zweiten Frequenzteiler ausgegebenes Signal und das Synchronisationssignal ($f_H$) zu empfangen, und
einen Tiefpaßfilter zum Empfang eines von dem Phasendetektor ausgegebenen Signals und zum Erzeugen des an den Steueranschluß des VCO zu liefernden Steuersignals.

**5.** Signalverarbeitungsschaltung für eine Videosignal-Aufzeichnungs-/Wiedergabevorrichtung, aufweisend:

einen spannungsgesteuerten Oszillator (VCO) (51) mit einer Freilauffrequenz, die ein ganzzahliges Vielfaches einer Summenfrequenz einer PAL-Fernseh-Farbhilfsträgerfrequenz ($f_{SC}$) und einer Synchronisationsfrequenz ($f_H$) eines Synchronisationssignals, multipliziert mit 40.125, darstellt,
einen ersten Frequenzteiler (52), dessen Eingabe eine Ausgabe des VCO darstellt und
einen phasenverriegelten Schaltkreis (PLL-Schaltung) zum Empfang eines ersten Eingangssignals ($f_C$) von dem ersten Frequenzteiler (52) und eines zweiten Eingangssignals ($f_{SC}$) von einem weiteren Oszillator (50), wobei das erste Eingangssignal die Summenfrequenz ($f_C$) und das zweite Eingangssignal die Farbhilfsträgerfrequenz ($f_{SC}$) aufweist und die PLL-Schaltung so eingerichtet ist, daß sie ein an einen Steueranschluß des VCO (51) zu lieferndes Steuersignal ausgibt,

wobei die PLL-Schaltung aufweist:

einen Phasenschieber (59), um das zweite Eingangssignal ($f_{SC}$) zu empfangen und vier Signale mit der Farbhilfsträgerfrequenz ($f_{SC}$) und einer jeweils um $\pi/4$ voneinander verschiedenen Phase zu erzeugen,
vier Substraktionsschaltungen (55-1 - 55-4), um jeweils eine Differenz zwischen einem entsprechenden der vier Signale und dem von dem ersten Frequenzteiler (52) erzeugten ersten Eingangssignal ($f_C$) zu berechnen und zwei Ausgangssignale mit um $\pi$ voneinander verschiedener Phase zu erzeugen,
einen Wähler (60), um aufeinanderfolgend in den einzelnen Perioden des horizontalen Synchronisationssignals ($f_H$) die acht Ausgangssignale der Subtraktionsschaltung auszuwählen, wobei die aufeinanderfolgend ausgewählten acht Signale jeweils gegenüber dem zuvor ausgewählten eine um $\pi/4$ verzögerte Phase aufweisen,
einen zweiten Frequenzteiler (56) zum aufeinanderfolgenden Empfang der von dem Wähler (60) ausgewählten Subtraktionssignale und zum Teilen der Frequenz jedes der Signale, um ein Signal mit im wesentlichen der Synchronisationsfrequenz ($f_H$) auszugeben,
einen Phasendetektor (57) zum Empfang eines von dem zweiten Frequenzteiler (56) ausgegebenen Signals und des horizontalen Synchronisationssignals ($f_H$), und
einen Tiefpaßfilter (58) zum Empfang eines von dem Phasendetektor (57) ausgegebenen Signals und zum Erzeugen des an den Steueranschluß des VCO (51) zu liefernden Steuersignals.

**6.** Signalverarbeitungsschaltung für eine Videosignal-Aufzeichnungs-/Wiedergabevorrichtung, aufweisend:

einen spannunggesteuerten Oszillator (VCO) (71) mit einer Freilauffrequenz, die ein ganzzahliges Vielfaches einer Summenfrequenz einer PAL-Fernseh-Farbhilfsträgerfrequenz $f_{SC}$ und einer mit 40.125 multiplizierten, horizontalen Synchronisationsfrequenz $f_H$ darstellt, und
einen phasenverriegelten Schaltkreis (PLL-Schaltung), zum Empfang eines ersten Eingangssignals ($2f_C$) von dem VCO (71) und eines zweiten Eingangssignals ($2f_{SC}$) von einem weiteren Oszillator (70), wobei das erste Eingangssignal eine zweimal so hohe Frequenz wie die Summenfrequenz und das zweite Eingangssignal eine zweimal so hohe Frequenz ($2f_{SC}$) wie die Farbhilfsträgerfrequenz aufweist und die PLL-Schaltung eingerichtet ist, ein an einen Steueranschluß des VCO (71) zu lieferndes Steuersignal auszugeben,

wobei die PLL-Schaltung aufweist:

einen Phasenschieber (79), um das zweite Eingangssignal ($2f_{SC}$) zu empfangen und zwei Signale mit zweimal so hoher Frequenz ($2f_{SC}$) wie die Farbhilfsträgerfrequenz ($f_{SC}$) und um $\pi/2$ voneinander verschiedener Phase zu erzeugen,
zwei Subtraktionsschaltungen (75-1, 75-2), um jeweils eine Differenz zwischen einem entsprechenden der beiden Signale und dem von dem VCO (71) erzeugten ersten Eingangssignal ($2f_C$) zu berechnen und zwei Signale mit um $\pi/2$ voneinander verschiedener Phase auszugeben,
vier Frequenzteiler-Schaltungen (90-1 - 90-4 und N1 - N4), um entsprechende von den beiden Subtraktionsschaltungen ausgegebene Signale in ihrer Frequenz durch 2 zu dividieren und jeweils zwei Ausgangssignale mit um $\pi$ voneinander verschiedener Phase zu liefern,
einen Wähler (80), um aufeinanderfolgend in den einzelnen Perioden des horizontalen Synchronisationssignals ($f_H$) die acht Ausgangssignale der vier Frequenzteilerschaltungen auszuwählen, wobei die aufeinanderfolgend ausgewählten acht Signale jeweils gegenüber dem zuvor ausgewählten relevanten eine um $\pi/4$ verzögerte Phase aufweisen,
einen Frequenzteiler (76), um nacheinander von dem Wähler (80) ausgewählte Subtraktionssignale zu empfangen und jeweils in ihrer Frequenz zu teilen, um ein Signal mit im wesentlichen der Synchronisationsfrequenz ($f_H$) auszugeben,
einen Phasendetektor (77) zum Empfang eines von dem Frequenzteiler (76) ausgegebenen Signals und des Synchronisationssignals ($f_H$), und
einen Tiefpaßfilter (78) zum Empfang eines von dem Phasendetektor (77) ausgegebenen Signals und zum Erzeugen des an den Steueranschluß des VCO (71) zu liefernden Steuersignals.

**7.** Schaltung nach Anspruch 6, wobei der Wähler (120) eingerichtet ist, in jeder Periode des horizontalen Synchronisationssignals ($f_H$) jeweils zwei Signale von den Frequenzteilerschaltungen (90-1 - 90-4, N1 - N4 und G1 - G8) auszuwählen, wobei die beiden ausgewählten Signale jeweils eine Phasendifferenz von $\pi$ aufweisen, und wobei der Wähler außerdem ein setz-/rücksetzbares Flip-Flop (SRFF) (121) aufweist, über das ein Signal an den Frequenzteiler (76) ausgegeben wird, wobei die zwei ausgewählten Signale entsprechenderweise auf den Setz- und den Rücksetzeingang des SRFF gegeben werden.

**8.** Signalverarbeitungsschaltung für eine Videosignal-Aufzeichnungs-/Wiedergabevorrichtung, aufweisend:

einen spannungsgesteuerten Oszillator (VCO) (101) mit einer Freilauffrequenz, die ein ganzzahliges Vielfaches einer Summenfrequenz ($f_C$) einer PAL-Fernseh-Farbhilfsträgerfrequenz ($f_{SC}$) und, mit 40,125 multipliziert, einer horizontalen Synchronisationsfrequenz ($f_H$) eines Synchronisationssignals darstellt, und
einen phasenverriegelten Schaltkreis (PLL-Schaltung) zum Empfang eines ersten Eingangssignals ($2f_C$) von dem VCO (101) und eines zweiten Eingangssignals ($2f_{SC}$) von einem weiteren Oszillator (100), wobei das erste Eingangssignal die zweifache Frequenz der Summenfrequenz und das zweite Eingangssignal eine zweimal so hohe Frequenz ($2f_{SC}$) wie die Farbhilfsträgerfrequenz aufweist und die PLL-Schaltung eingerichtet ist, ein an einen Steueranschluß des VCO (101) zu lieferndes Steuersignal auszugeben,

wobei die PLL-Schaltung aufweist:

einen Phasenschieber (109), um das erste Eingangssignal ($2f_C$) zu empfangen und zwei Signale mit zweimal so hoher Frequenz ($2f_C$) wie die genannte Summenfrequenz ($f_C$) und mit einer um $\pi/2$ voneinander verschiedenen Phase zu erzeugen,
zwei Subtraktionsschaltungen (105-1, 105-2), um jeweils eine Differenz zwischen einem entsprechenden der beiden Signale und dem genannten zweiten Eingangssignal ($2f_{SC}$) mit einer doppelt so hohen Frequenz wie der Farbhilfsträgerfrequenz ($f_{SC}$) zu berechnen und zwei Ausgangssignale mit um $\pi/2$ voneinander verschie-

dener Phase zu liefern,
vier Frequenzteilerschaltungen (115-1 - 115-4 und N1 - N4), um entsprechende von den beiden Subtraktionsschaltungen ausgegebene Signale in ihrer Frequenz durch 2 zu dividieren, wobei die Frequenzteilerschaltungen jeweils zwei Ausgangssignale mit um $\pi/2$ voneinander verschiedener Phase ausgeben,
einen Wähler (110), um in den einzelnen Perioden des horizontalen Synchronisationssignals ($f_H$) aufeinanderfolgend die acht Ausgangssignale der vier Frequenzteilerschaltungen auszuwählen, wobei die aufeinanderfolgend ausgewählten acht Signale jeweils gegenüber dem zuvor ausgewählten eine um $\pi/4$ verzögerte Phase aufweisen,
einen Frequenzteiler (106), um aufeinanderfolgend die von dem Wähler (110) gewählten Subtraktionssignale zu empfangen und jeweils in ihrer Frequenz zu teilen, um ein Signal mit im wesentlichen der Synchronisationsfrequenz ($f_H$) auszugeben,
einen Phasendetektor (107), um ein von dem Frequenzteiler (106) ausgegebenes Signal und das Synchronisationssignal ($f_H$) zu empfangen, und
einen Tiefpaßfilter (108), um ein von dem Phasendetektor (107) ausgegebenes Signal zu empfangen und das an den Steueranschluß des VCO (101) zu liefernde Steuersignal zu erzeugen.

**9.** Schaltung nach einem der Ansprüche 1 bis 8, wobei die bzw. jede Subtraktionsschaltung eine Verzögerungs-Flip-Flop-Schaltung mit einem Takt-Eingangsanschluß, an den das erste Eingangssignal ($f_C$, $2f_C$) geliefert wird, und einem Dateneingangsanschluß, an den das zweite Eingangssignal ($f_{SC}$, $2f_{SC}$) geliefert wird, darstellt.

**10.** Schaltung nach einem der Ansprüche 1 bis 9, wobei die Wahl des Wählers von einer ein Wahlsignal erzeugenden Schaltung (42, 62, 82, 112, 142) gesteuert wird, an die das um eine vorbestimmte Phase verzögerte horizontale Synchronisationssignal ($f_H$) geliefert wird.

**11.** Videosignal-Aufzeichnungs-/Wiedergabevorrichtung mit einer Signalverarbeitungsschaltung nach einem der vorhergehenden Ansprüche.

## Revendications

**1.** Circuit de traitement de signaux pour dispositif d'enregistrement/reproduction de signaux vidéo, comportant :

un oscillateur commandé en tension (VCO) (31, 131) possédant une fréquence d'oscillation libre qui est un multiple entier d'une fréquence somme ($f_C$), égale à la somme d'une première fréquence ($f_{SC}$) et d'une fréquence de synchronisation ($f_H$) d'un signal de synchronisation, multipliée par $X \pm 1/Y$ où X et Y sont des entiers prédéterminés ;
un premier diviseur de fréquence (32, 132) recevant en entrée la sortie du VCO (31, 131) ; et
une boucle à phase asservie (PLL) destinée à recevoir un premier signal d'entrée ($f_C$) en provenance du premier diviseur de fréquence (32, 132) et un second signal d'entrée ($f_{SC}$) en provenance d'un autre oscillateur (30, 130), le premier signal d'entrée possédant la fréquence somme ($f_C$), le second signal d'entrée possédant la première fréquence ($f_{SC}$) et la PLL étant montée de manière à délivrer en sortie un signal de commande à envoyer sur une borne de commande du VCO ;

la PLL comportant :

un déphaseur (39, 139) monté de manière à recevoir le second signal d'entrée ($f_{SC}$) et à générer Y signaux possédant ladite première fréquence ($f_{SC}$) et un déphasage égal à $2\pi/Y$ ;
un sélecteur (40, 140) monté de manière à sélectionner séquentiellement lesdits Y signaux à chaque période du signal de synchronisation horizontale ($f_H$), chacun desdits Y signaux sélectionnés séquentiellement étant avancé en phase de $2\pi/Y$ par rapport au signal pertinent précédemment sélectionné ;
un circuit de soustraction (35, 135) monté de manière à calculer une différence entre ledit signal sélectionné par ledit sélecteur et ledit premier signal d'entrée ($f_C$), délivré en sortie par ledit premier diviseur de fréquence, de phase correspondant à celle dudit signal sélectionné ;
un second diviseur de fréquence (36, 136) destiné à recevoir séquentiellement les signaux de soustraction délivrés en sortie par ledit circuit de soustraction (35, 135) et à diviser par X la fréquence de chacun desdits signaux ;
un détecteur de phase (37, 137) destiné à recevoir un signal délivré en sortie par ledit second diviseur de fréquence (36, 136) et ledit signal de synchronisation ($f_H$) ; et

un filtre passe-bas (38, 138) destiné à recevoir un signal délivré en sortie par ledit détecteur de phase (37, 137) et à générer ledit signal de commande à envoyer sur la borne de commande dudit VCO (31, 131).

**2.** Circuit de traitement de signaux selon la revendication 1, dans lequel le VCO (31) possède une fréquence d'oscillation libre qui est un multiple entier d'une fréquence somme égale à la somme d'une fréquence ($f_{SC}$) de la sous-porteuse de chrominance en télévision PAL et d'une fréquence de synchronisation horizontale ($f_H$), multipliée par 40,125, où X = 40 et Y = 8.

**3.** Circuit de traitement de signaux selon la revendication 1, dans lequel l'oscillateur commandé en tension (VCO) (131) possède une fréquence d'oscillation libre qui est un multiple entier d'une fréquence somme égale à la somme d'une fréquence ($f_{SC}$) de la sous-porteuse de chrominance en télévision et d'une fréquence de synchronisation horizontale ($f_H$), multipliée par 47,25, où X = 47 et Y = 4.

**4.** Circuit de traitement de signaux pour dispositif d'enregistrement/reproduction de signaux vidéo, comportant :

un oscillateur commandé en tension (VCO) possédant une fréquence d'oscillation libre qui est un multiple entier d'une fréquence somme égale à la somme d'une fréquence ($f_{SC}$) de la sous-porteuse de chrominance en télévision PAL et d'une fréquence de synchronisation horizontale ($f_H$) d'un signal de synchronisation, multipliée par 40,125 ;
un premier diviseur de fréquence recevant en entrée la sortie du VCO ; et
une boucle à phase asservie (PLL) destinée à recevoir un premier signal d'entrée ($f_C$) en provenance du premier diviseur de fréquence et un second signal d'entrée ($f_{SC}$) en provenance d'un autre oscillateur, le premier signal d'entrée possédant la fréquence somme ($f_C$), le second signal d'entrée possédant la fréquence ($f_{SC}$) de la sous-porteuse de chrominance et la PLL étant montée de manière à délivrer en sortie un signal de commande à envoyer sur une borne de commande du VCO ;

la PLL comportant :

un déphaseur monté de manière à recevoir le premier signal d'entrée ($f_C$) et à générer huit signaux possédant ladite première fréquence ($f_C$) et un déphasage égal à $\pi/4$ ;
un sélecteur monté de manière à sélectionner séquentiellement lesdits huit signaux à chaque période du signal de synchronisation horizontale ($f_H$), chacun desdits huit signaux sélectionnés séquentiellement étant retardé en phase de $\pi/4$ par rapport au signal précédemment sélectionné ;
un circuit de soustraction monté de manière à calculer une différence entre ledit signal ($f_C$) sélectionné par ledit sélecteur et ledit second signal d'entrée possédant ladite fréquence ($f_{SC}$) de la sous-porteuse de chrominance ;
un second diviseur de fréquence destiné à recevoir séquentiellement les signaux de soustraction délivrés en sortie par ledit circuit de soustraction et à diviser la fréquence de chacun desdits signaux afin de délivrer en sortie un signal possédant une fréquence pratiquement égale à ladite fréquence de synchronisation ($f_H$) ;
un détecteur de phase destiné à recevoir un signal délivré en sortie par ledit second diviseur de fréquence et ledit signal de synchronisation ($f_H$) ; et
un filtre passe-bas destiné à recevoir un signal délivré en sortie par ledit détecteur de phase et à générer ledit signal de commande à envoyer sur la borne de commande dudit VCO.

**5.** Circuit de traitement de signaux pour dispositif d'enregistrement/reproduction de signaux vidéo, comportant :

un oscillateur commandé en tension (VCO) (51) possédant une fréquence d'oscillation libre qui est un multiple entier d'une fréquence somme égale à la somme d'une fréquence ($f_{SC}$) de la sous-porteuse de chrominance en télévision PAL et d'une fréquence de synchronisation horizontale ($f_H$) d'un signal de synchronisation, multipliée par 40,125 ;
un premier diviseur de fréquence (52) recevant en entrée la sortie du VCO ; et
une boucle à phase asservie (PLL) destinée à recevoir un premier signal d'entrée ($f_C$) en provenance du premier diviseur de fréquence (52) et un second signal d'entrée ($f_{SC}$) en provenance d'un autre oscillateur (50), le premier signal d'entrée possédant la fréquence somme ($f_C$), le second signal d'entrée possédant la fréquence ($f_{SC}$) de la sous-porteuse de chrominance et la PLL étant montée de manière à délivrer en sortie un signal de commande à envoyer sur une borne de commande du VCO (51) ;

la PLL comportant :

un déphaseur (59) monté de manière à recevoir le second signal d'entrée ($f_{SC}$) et à générer quatre signaux possédant ladite fréquence ($f_{SC}$) de la sous-porteuse de chrominance et un déphasage égal à $\pi/4$ ;
quatre circuits de soustraction (55-1 - 55-4) montés chacun de manière à calculer une différence entre l'un respectif desdits quatre signaux et ledit premier signal d'entrée ($f_C$) généré par ledit premier diviseur de fréquence (52) et à fournir deux signaux de sortie déphasés de $\pi$ ;
un sélecteur (60) monté de manière à sélectionner séquentiellement les huit signaux de sortie desdits circuits de soustraction à chaque période du signal de synchronisation horizontale ($f_H$), chacun desdits huit signaux sélectionnés séquentiellement étant retardé en phase de $\pi/4$ par rapport au signal précédemment sélectionné ;
un second diviseur de fréquence (56) destiné à recevoir séquentiellement les signaux de soustraction sélectionnés par ledit sélecteur (60) et à diviser la fréquence de chacun desdits signaux pour délivrer en sortie un signal possédant une fréquence pratiquement égale à ladite fréquence de synchronisation ($f_H$) ;
un détecteur de phase (57) destiné à recevoir un signal délivré en sortie par ledit second diviseur de fréquence (56) et ledit signal de synchronisation horizontale ($f_H$) ; et
un filtre passe-bas (58) destiné à recevoir un signal délivré en sortie par ledit détecteur de phase (57) et à générer ledit signal de commande à envoyer sur la borne de commande dudit VCO (51).

**6.** Circuit de traitement de signaux pour dispositif d'enregistrement/reproduction de signaux vidéo, comportant :

un oscillateur commandé en tension (VCO) (71) possédant une fréquence d'oscillation libre qui est un multiple entier d'une fréquence somme égale à la somme d'une fréquence ($f_{SC}$) de la sous-porteuse de chrominance en télévision PAL et d'une fréquence de synchronisation horizontale ($f_H$), multipliée par 40,125 ; et
une boucle à phase asservie (PLL) destinée à recevoir un premier signal d'entrée ($2f_C$) en provenance du VCO (71) et un second signal d'entrée ($2f_{SC}$) en provenance d'un autre oscillateur (70), le premier signal d'entrée possédant une fréquence égale à deux fois la fréquence somme, le second signal d'entrée possédant une fréquence ($2f_{SC}$) égale à deux fois la fréquence de la sous-porteuse de chrominance et la PLL étant montée de manière à délivrer en sortie un signal de commande à envoyer sur une borne de commande du VCO (71) ;

la PLL comportant :

un déphaseur (79) monté de manière à recevoir le second signal d'entrée ($2f_{SC}$) et à générer deux signaux possédant une fréquence ($2f_{SC}$) égale à deux fois ladite fréquence ($f_{SC}$) de la sous-porteuse de chrominance et un déphasage égal à $\pi/2$ ;
deux circuits de soustraction (75-1, 75-2) montés chacun de manière à calculer une différence entre l'un respectif desdits deux signaux et ledit premier signal d'entrée ($2f_C$) généré par ledit VCO (71) et à fournir deux signaux de sortie déphasés de $\pi/2$ ;
quatre circuits diviseurs de fréquence (90-1-90-4 et N1-N4) destinés à diviser par 2 la fréquence des signaux respectifs délivrés en sortie par lesdits deux circuits de soustraction, chaque circuit diviseur de fréquence fournissant deux signaux de sortie déphasés de $\pi$ ;
un sélecteur (80) monté de manière à sélectionner séquentiellement les huit signaux de sortie délivrés par lesdits quatre circuits diviseurs de fréquence à chaque période du signal de synchronisation horizontale ($f_H$), chacun desdits huit signaux sélectionnés séquentiellement étant retardé en phase de $\pi/4$ par rapport au signal pertinent précédemment sélectionné ;
un diviseur de fréquence (76) destiné à recevoir séquentiellement les signaux de soustraction sélectionnés par ledit sélecteur (80) et à diviser la fréquence de chacun desdits signaux sélectionnés pour délivrer en sortie un signal possédant une fréquence pratiquement égale à ladite fréquence de synchronisation ($f_H$) ;
un détecteur de phase (77) destiné à recevoir un signal délivré en sortie par ledit diviseur de fréquence (76) et ledit signal de synchronisation ($f_H$) ; et
un filtre passe-bas (78) destiné à recevoir un signal délivré en sortie par ledit détecteur de phase (77) et à générer ledit signal de commande à envoyer sur la borne de commande dudit VCO (71).

**7.** Circuit de traitement de signaux selon la revendication 6, dans lequel le sélecteur (120) est monté de manière à sélectionner deux signaux en provenance de ladite pluralité de circuits diviseurs de fréquence (90-1 -90-4, N1-N4 et G1-G8) à chaque période du signal de synchronisation horizontale ($f_H$), lesdits deux signaux sélectionnés possédant un déphasage de $\pi$ ; et le sélecteur comporte en outre une bascule bistable d'initialisation/réinitialisation (SRFF) (121) via laquelle un signal est délivré en sortie sur le diviseur de fréquence (76), les deux signaux sélectionnés étant respectivement entrés sur les entrées d'initialisation et de réinitialisation de la SRFF.

**8.** Circuit de traitement de signaux pour dispositif d'enregistrement/reproduction de signaux vidéo, comportant :

un oscillateur commandé en tension (VCO) (101) possédant une fréquence d'oscillation libre qui est un multiple entier d'une fréquence somme ($f_C$), égale à la somme d'une fréquence ($f_{SC}$) de la sous-porteuse de chrominance en télévision PAL et d'une fréquence de synchronisation horizontale ($f_H$) d'un signal de synchronisation, multipliée par 40,125 ; et une boucle à phase asservie (PLL) destinée à recevoir un premier signal d'entrée ($2f_C$) en provenance du VCO (101) et un second signal d'entrée ($2f_{SC}$) en provenance d'un autre oscillateur (100), le premier signal d'entrée possédant une fréquence égale à deux fois la fréquence somme, le second signal d'entrée possédant une fréquence ($2f_{SC}$) égale à deux fois la fréquence de la sous-porteuse de chrominance, et la PLL étant montée de manière à délivrer en sortie un signal de commande à envoyer sur une borne de commande du VCO (101) ;

la PLL comportant :

un déphaseur (109) monté de manière à recevoir ledit premier signal d'entrée ($2f_C$) et à générer deux signaux possédant une fréquence ($2f_C$) égale à deux fois ladite fréquence somme ($f_C$) et un déphasage égal à $\pi/2$ ;
deux circuits de soustraction (105-1, 105-2) montés chacun de manière à calculer une différence entre l'un respectif desdits deux signaux et ledit second signal d'entrée ($2f_{SC}$) possédant une fréquence égale à deux fois la fréquence ($f_{SC}$) de la sous-porteuse de chrominance, et à fournir deux signaux de sortie déphasés de $\pi/2$ ;
quatre circuits diviseurs de fréquence (115-1-115-4 et N1-N4) destinés à diviser par 2 la fréquence des signaux respectifs délivrés en sortie par lesdits deux circuits de soustraction, chaque circuit diviseur de fréquence délivrant deux signaux de sortie déphasés de $\pi/2$ ;
un sélecteur (110) monté de manière à sélectionner séquentiellement les huit signaux de sortie desdits quatre circuits diviseurs de fréquence à chaque période du signal de synchronisation horizontale ($f_H$), chacun desdits huit signaux sélectionnés séquentiellement étant retardé en phase de $\pi/4$ par rapport au signal précédemment sélectionné ;
un diviseur de fréquence (106) destiné à recevoir séquentiellement les signaux de soustraction sélectionnés par ledit sélecteur (110) et à diviser la fréquence de chacun desdits signaux sélectionnés pour délivrer en sortie un signal possédant une fréquence pratiquement égale à ladite fréquence de synchronisation ($f_H$) ;
un détecteur de phase (107) destiné à recevoir un signal délivré en sortie par ledit diviseur de fréquence (106) et ledit signal de synchronisation ($f_H$) ; et
un filtre passe-bas (108) destiné à recevoir un signal délivré en sortie par ledit détecteur de phase (107) et à générer ledit signal de commande à envoyer sur la borne de commande dudit VCO (101).

**9.** Circuit de traitement de signaux selon l'une quelconque des revendications 1 à 8, dans lequel le circuit de soustraction ou chacun des circuits de soustraction est constitué d'une bascule du type D possédant une borne d'entrée d'horloge sur laquelle est envoyé ledit premier signal d'entrée ($f_C$, $2f_C$), et une borne d'entrée de données sur laquelle est envoyé ledit second signal d'entrée ($f_{SC}$, $2f_{SC}$).

**10.** Circuit de traitement de signaux selon l'une quelconque des revendications 1 à 9, dans lequel l'opération de sélection dudit sélecteur est commandée par un circuit générateur de signaux de sélecteur (42, 62, 82, 112, 142) sur lequel ledit signal de synchronisation horizontale ($f_H$) est envoyé avec un retard de phase prédéterminé.

**11.** Dispositif d'enregistrement/reproduction de signaux vidéo comportant un circuit de traitement de signaux selon l'une quelconque des revendications précédentes.

FIG. 1A RECORD MODE

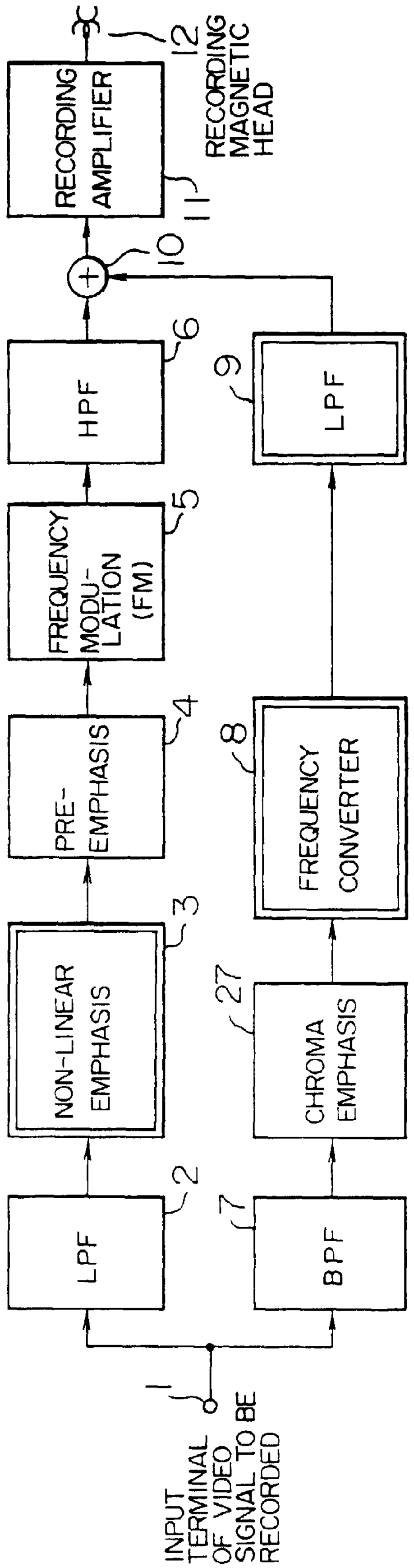


FIG. 1B PLAYBACK MODE

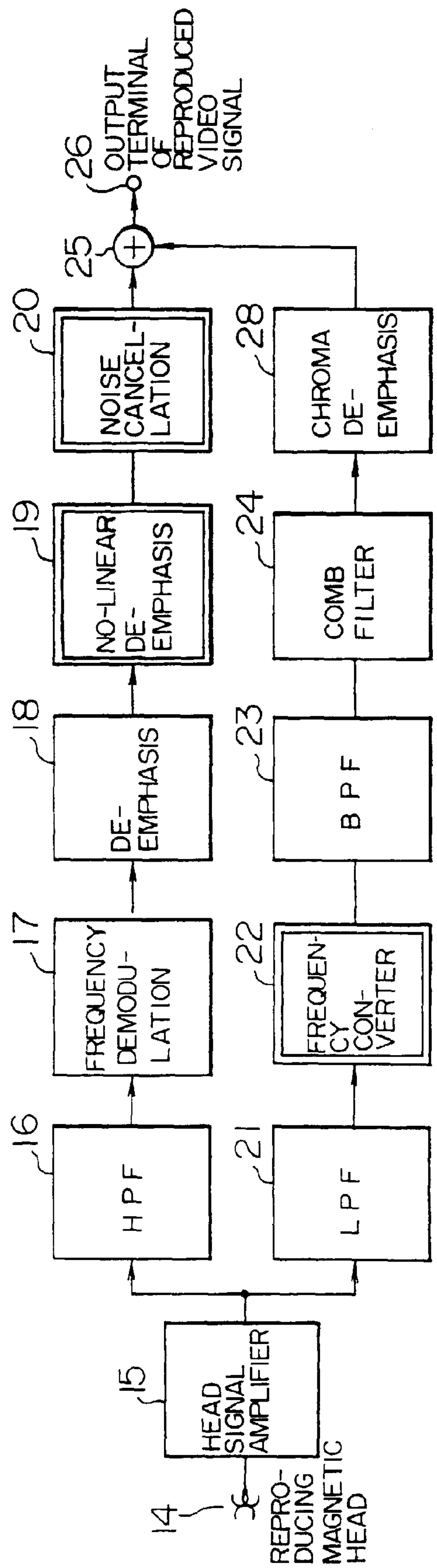

F I G. 1C

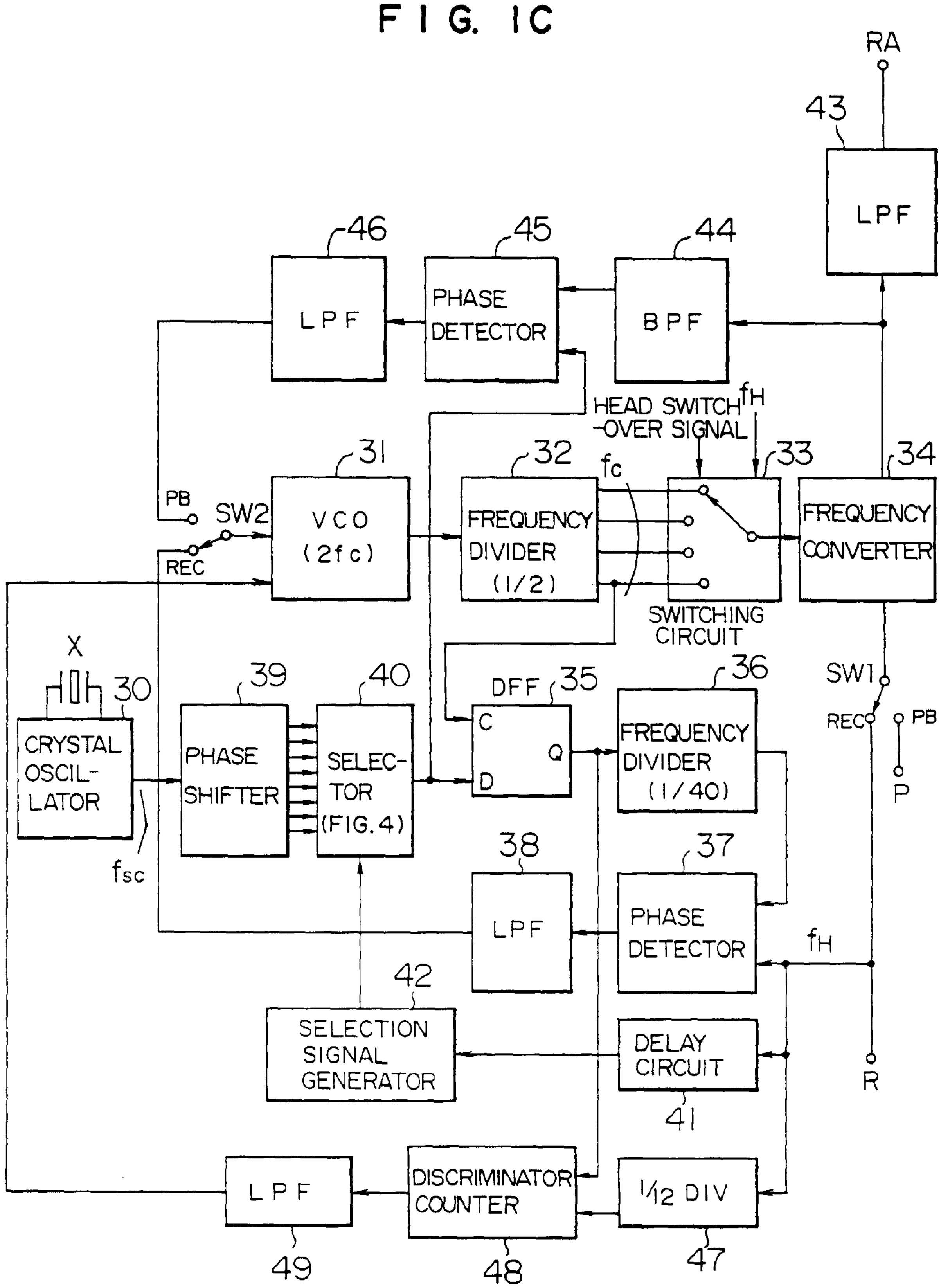
RA
43
LPF
46
LPF
45
PHASE DETECTOR
44
BPF
HEAD SWITCH-OVER SIGNAL
fH
31
VCO (2fc)
32
FREQUENCY DIVIDER (1/2)
fc
33
34
FREQUENCY CONVERTER
PB
SW2
REC
SWITCHING CIRCUIT
X
30
CRYSTAL OSCIL-LATOR
fsc
39
PHASE SHIFTER
40
SELEC-TOR (FIG. 4)
DFF
35
C
D
Q
36
FREQUENCY DIVIDER (1/40)
SW1
REC
PB
P
38
LPF
37
PHASE DETECTOR
fH
42
SELECTION SIGNAL GENERATOR
DELAY CIRCUIT
41
R
LPF
49
DISCRIMINATOR COUNTER
48
1/2 DIV
47

F I G. 1D

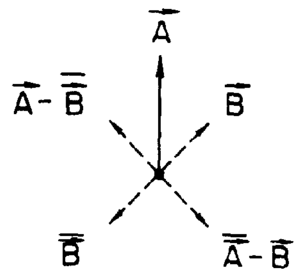

F I G. 2A

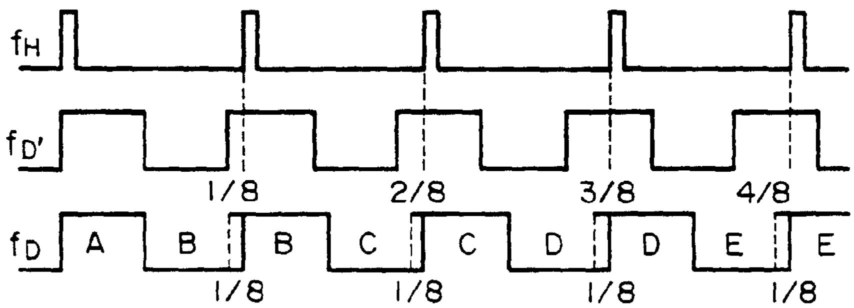

F I G. 2B

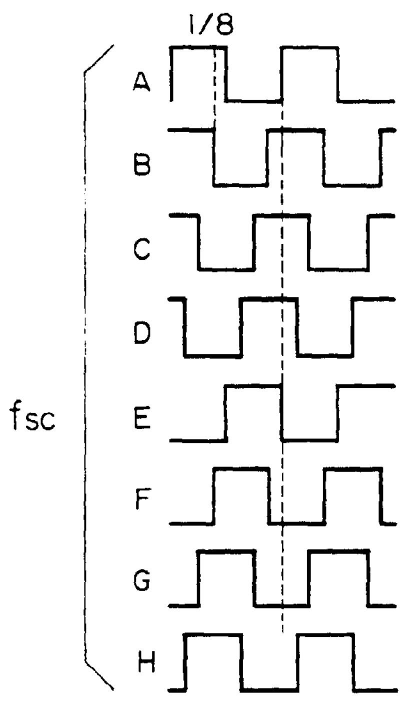

FIG. 2C

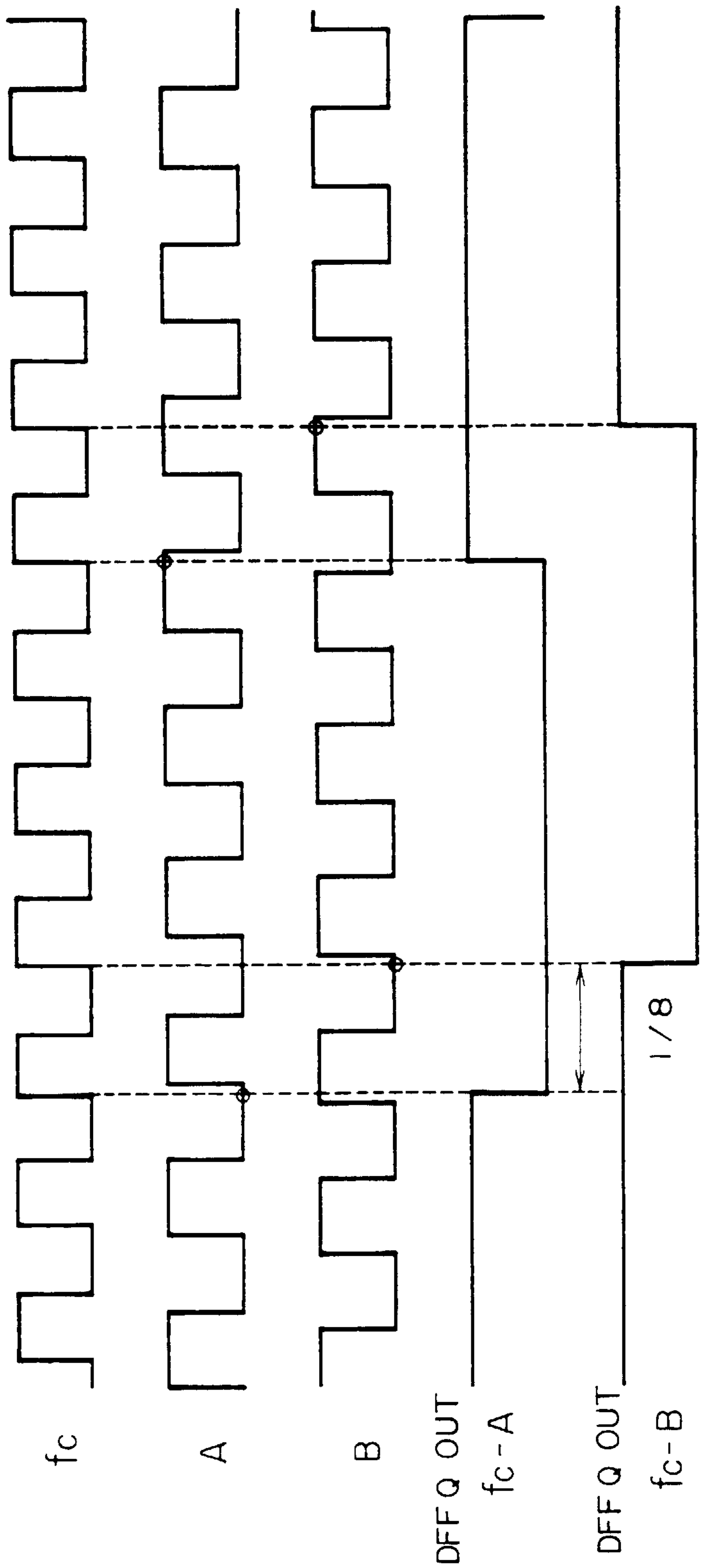

FIG. 3

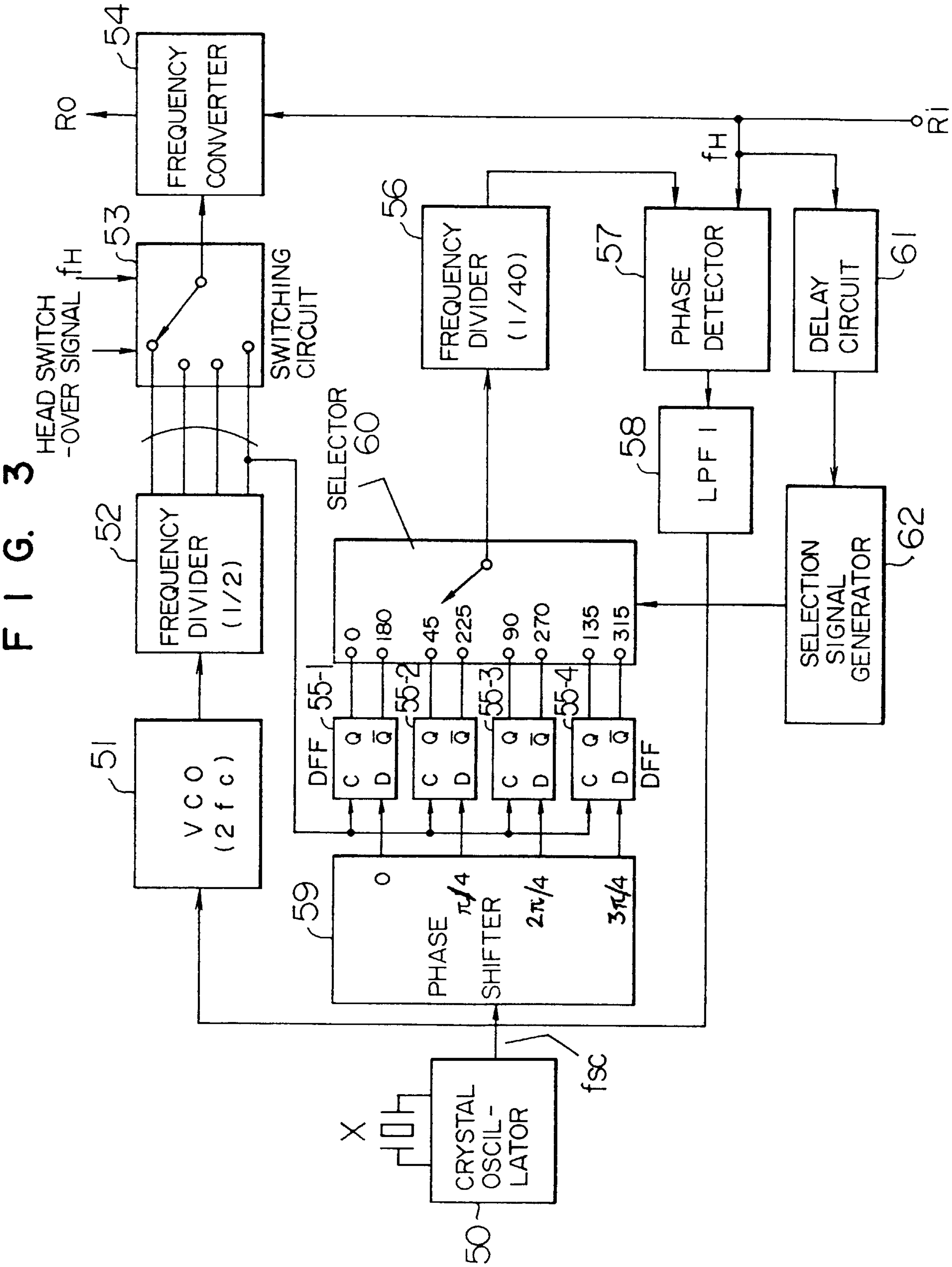

HEAD SWITCH -OVER SIGNAL
fH
53
SWITCHING CIRCUIT
54
FREQUENCY CONVERTER
RO
Ri
fH
52
FREQUENCY DIVIDER (1/2)
51
VCO (2fc)
56
FREQUENCY DIVIDER (1/40)
57
PHASE DETECTOR
61
DELAY CIRCUIT
58
LPF I
62
SELECTION SIGNAL GENERATOR
SELECTOR 60
0
180
45
225
90
270
135
315
55-1
55-2
55-3
55-4
DFF
C
D
Q
Q̄
DFF
59
PHASE SHIFTER
0
π/4
2π/4
3π/4
fsc
X
CRYSTAL OSCIL-LATOR
50

F I G. 4

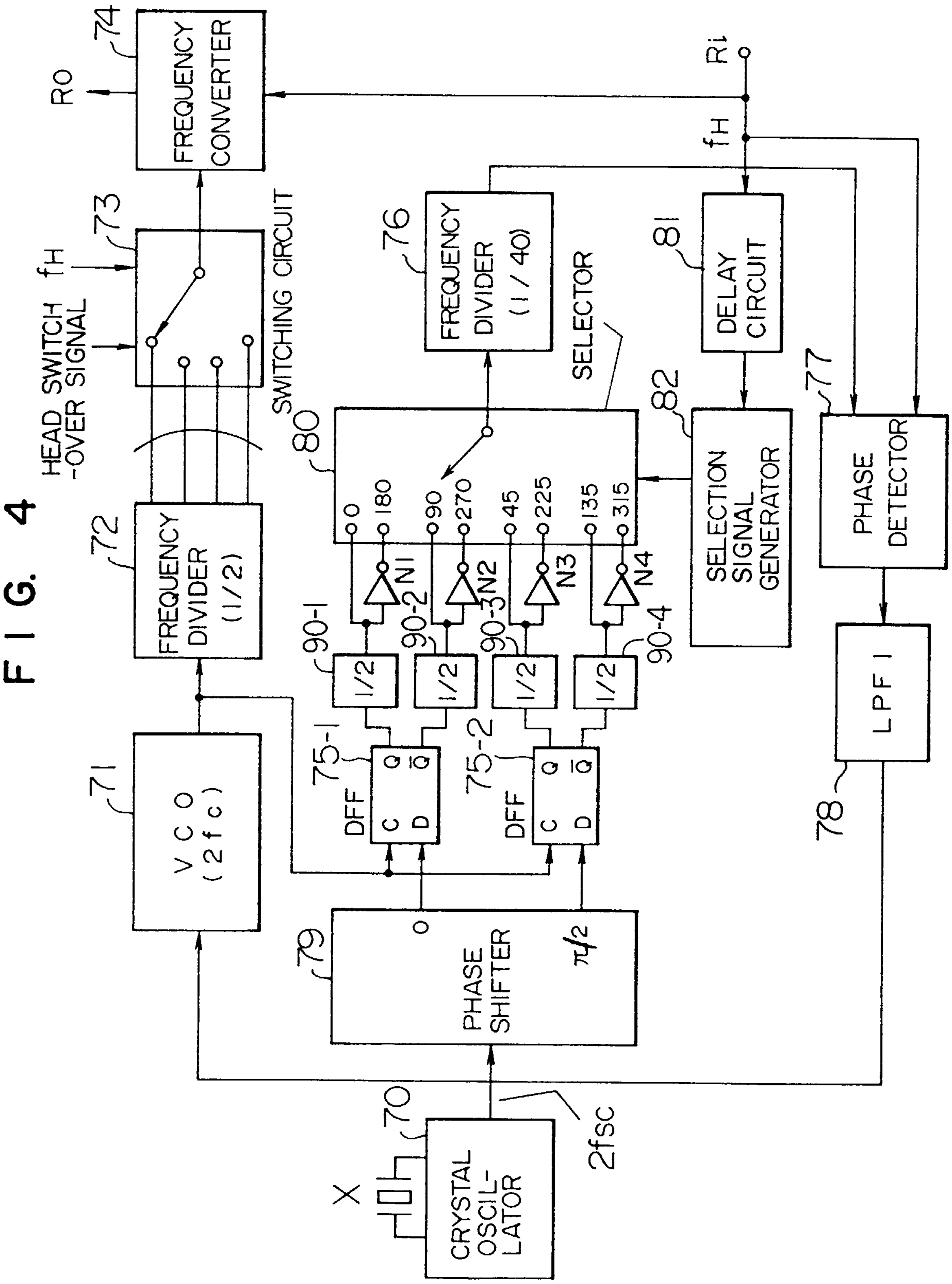
HEAD SWITCH -OVER SIGNAL
fH
73
SWITCHING CIRCUIT
74
FREQUENCY CONVERTER
Ro
Ri
fH
72
FREQUENCY DIVIDER (1/2)
71
VCO (2fc)
70
CRYSTAL OSCIL-LATOR
X
2fsc
79
PHASE SHIFTER
0
π/2
75-1
75-2
DFF
C D Q Q̄
90-1
90-2
90-3
90-4
1/2
N1
N2
N3
N4
0
180
90
270
45
225
135
315
80
SELECTOR
76
FREQUENCY DIVIDER (1/40)
81
DELAY CIRCUIT
82
SELECTION SIGNAL GENERATOR
77
PHASE DETECTOR
78
LPF 1

FIG. 5

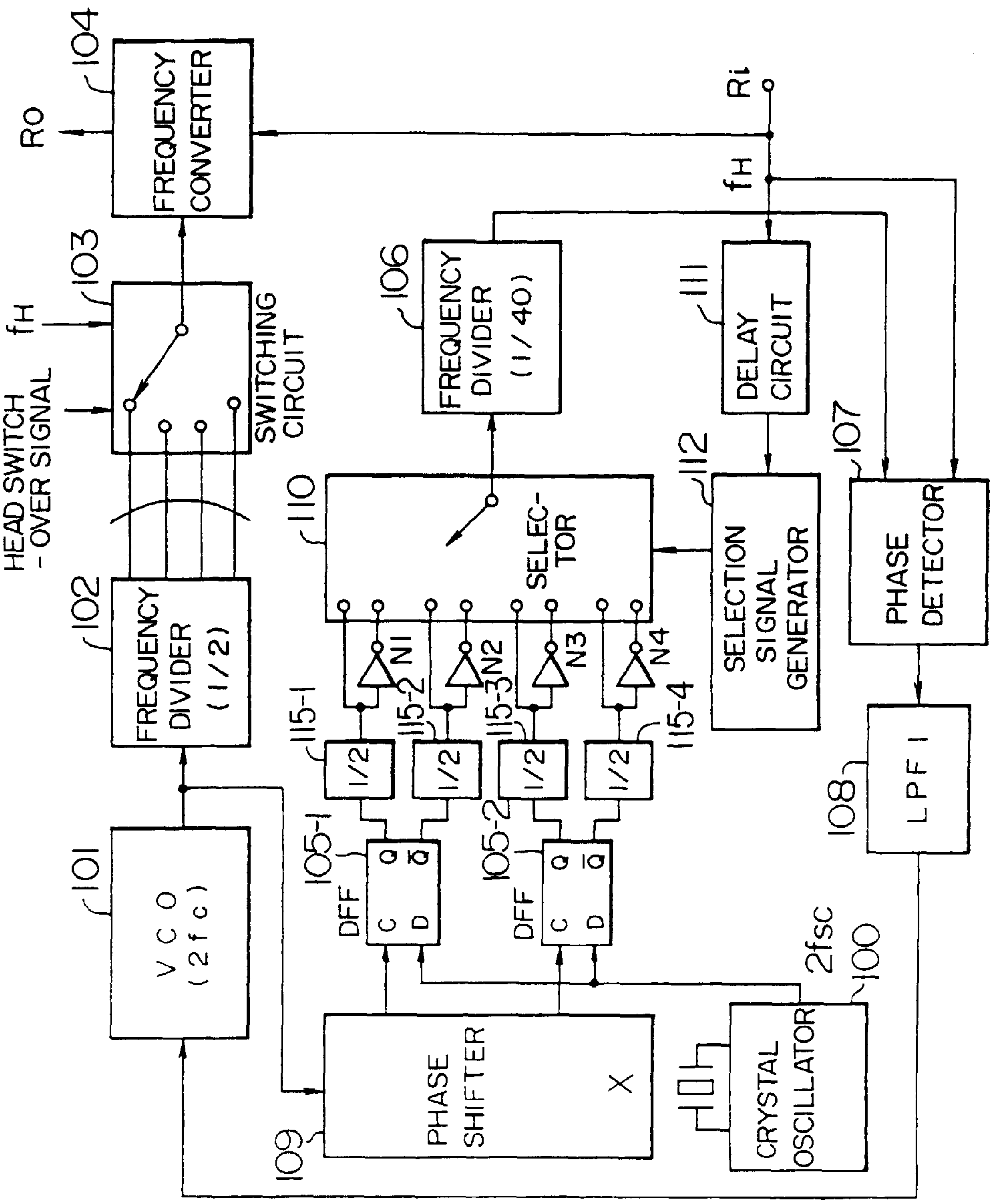
104
FREQUENCY CONVERTER
Ro
Ri
fH
103
HEAD SWITCH-OVER SIGNAL
SWITCHING CIRCUIT
102
FREQUENCY DIVIDER (1/2)
101
VCO (2fc)
106
FREQUENCY DIVIDER (1/40)
111
DELAY CIRCUIT
110
SELECTOR
112
SELECTION SIGNAL GENERATOR
107
PHASE DETECTOR
108
LPF1
N1
N2
N3
N4
115-1
115-2
115-3
115-4
1/2
105-1
105-2
DFF
C
D
Q
Q̄
2fsc
100
CRYSTAL OSCILLATOR
109
PHASE SHIFTER
X

FIG. 6

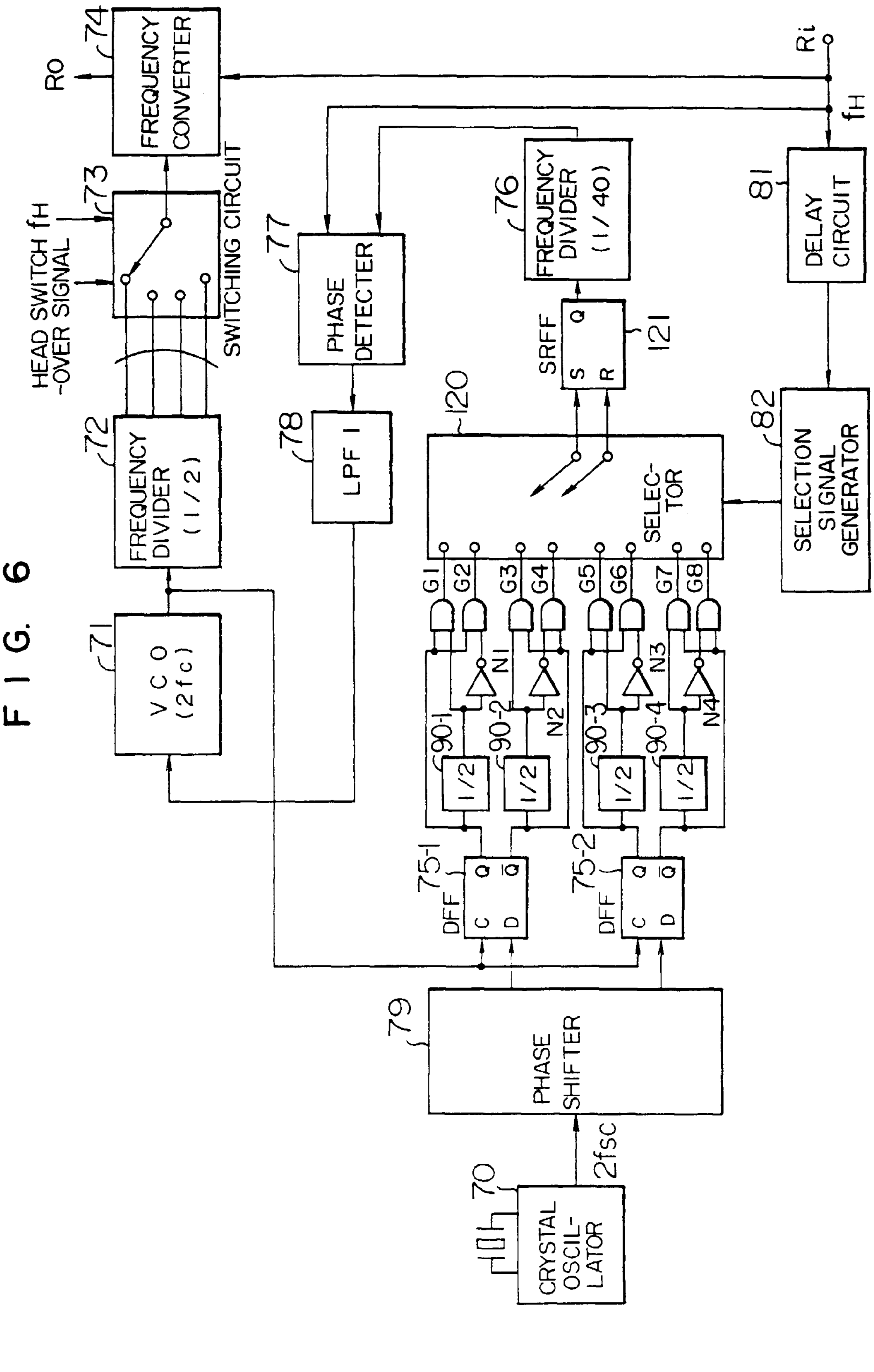
RO
74
FREQUENCY CONVERTER
73
HEAD SWITCH fH -OVER SIGNAL
SWITCHING CIRCUIT
72
FREQUENCY DIVIDER (1/2)
71
VCO (2fc)
77
PHASE DETECTER
78
LPF 1
76
FREQUENCY DIVIDER (1/40)
SRFF
S
R
Q
121
120
SELEC-TOR
G1
G2
G3
G4
G5
G6
G7
G8
N1
N2
N3
N4
90-1
90-2
90-3
90-4
1/2
75-1
75-2
DFF
C
D
Q
Q̄
79
PHASE SHIFTER
2fsc
70
CRYSTAL OSCIL-LATOR
Ri
fH
81
DELAY CIRCUIT
82
SELECTION SIGNAL GENERATOR

FIG. 7

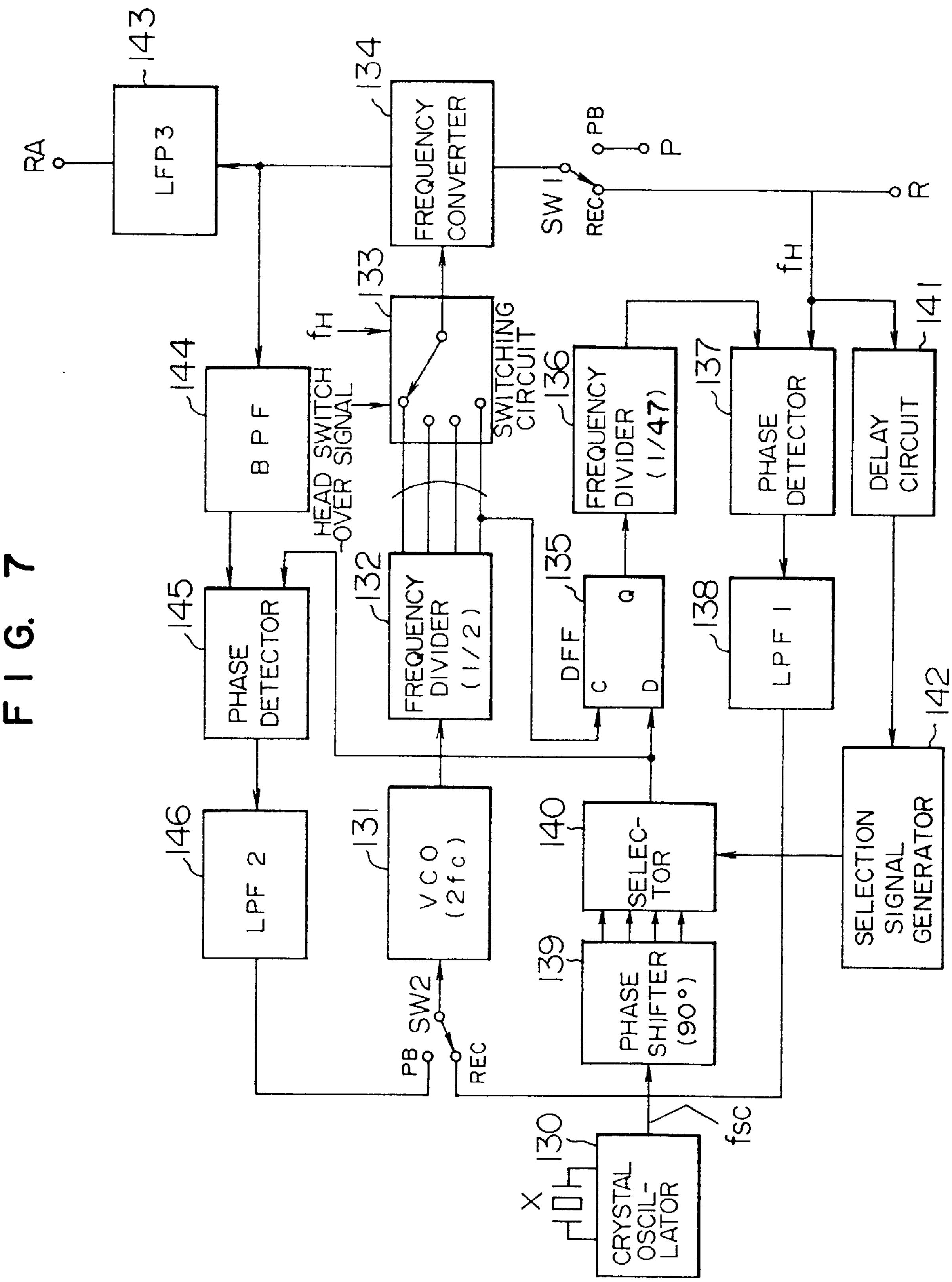
RA
143
LFP3
134
FREQUENCY CONVERTER
PB
P
SW1
REC
R
133
$f_H$
SWITCHING CIRCUIT
144
BPF
HEAD SWITCH -OVER SIGNAL
136
FREQUENCY DIVIDER (1/47)
137
PHASE DETECTOR
141
DELAY CIRCUIT
$f_H$
145
PHASE DETECTOR
132
FREQUENCY DIVIDER (1/2)
135
DFF
C
Q
D
138
LPF1
146
LPF2
131
VCO (2fc)
140
SELEC-TOR
142
SELECTION SIGNAL GENERATOR
139
PHASE SHIFTER (90°)
SW2
PB
REC
130
X
CRYSTAL OSCIL-LATOR
$f_{SC}$

FIG. 8

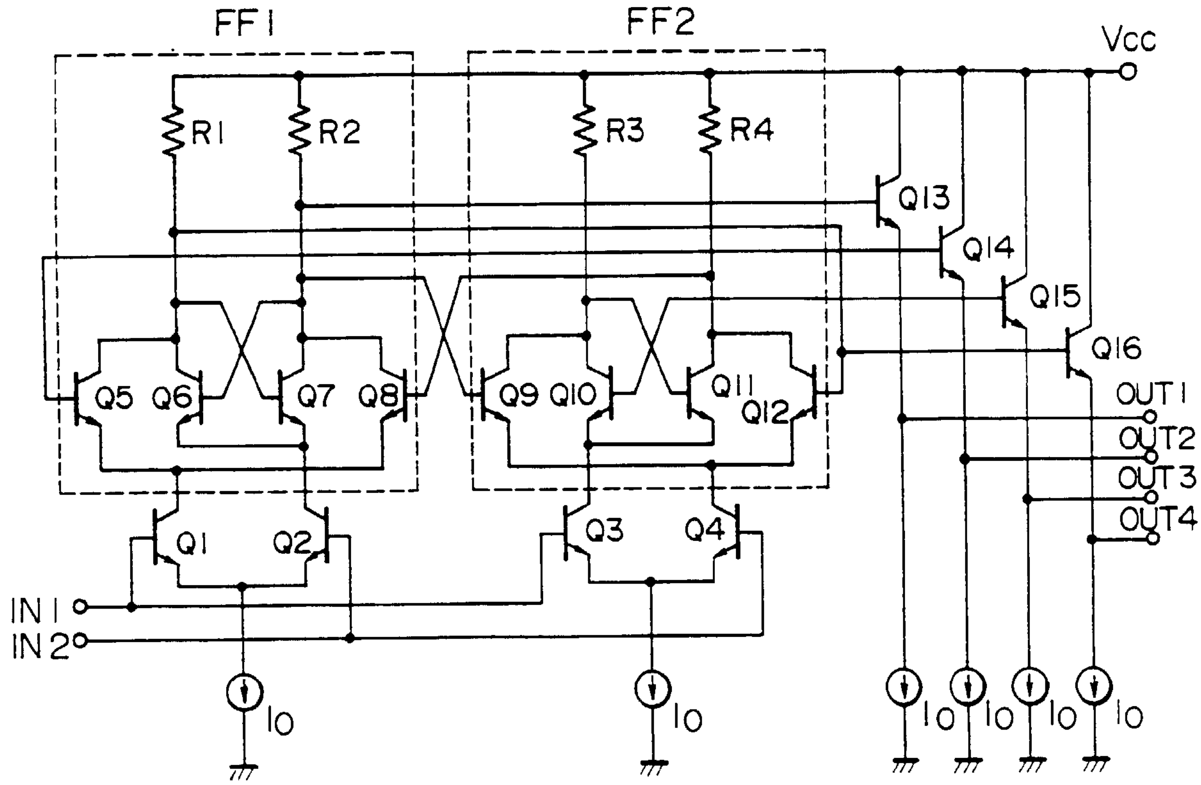
FF1
FF2
Vcc
R1
R2
R3
R4
Q13
Q14
Q15
Q16
Q5 Q6
Q7 Q8
Q9 Q10
Q11
Q12
OUT1
OUT2
OUT3
OUT4
Q1
Q2
Q3
Q4
IN1
IN2
I0

FIG. 9

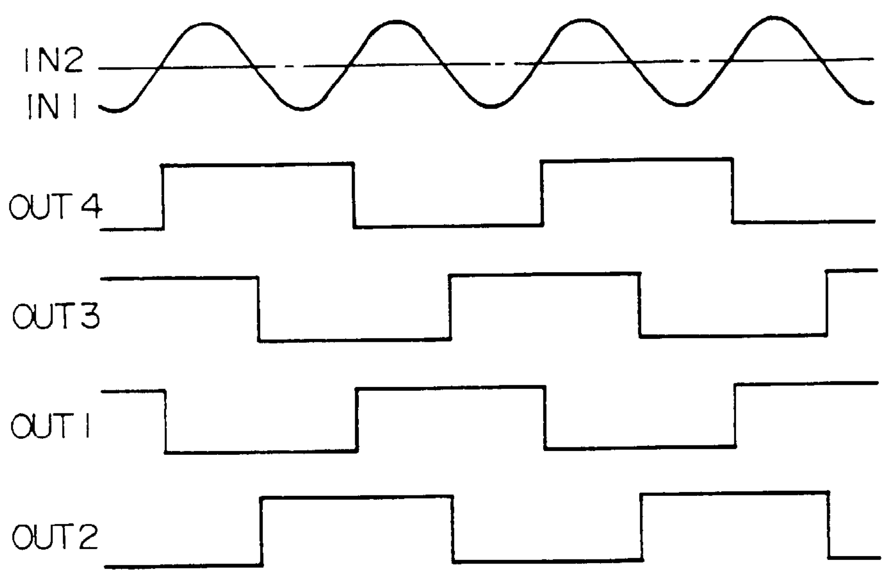
IN2
IN1
OUT4
OUT3
OUT1
OUT2

FIG. 10

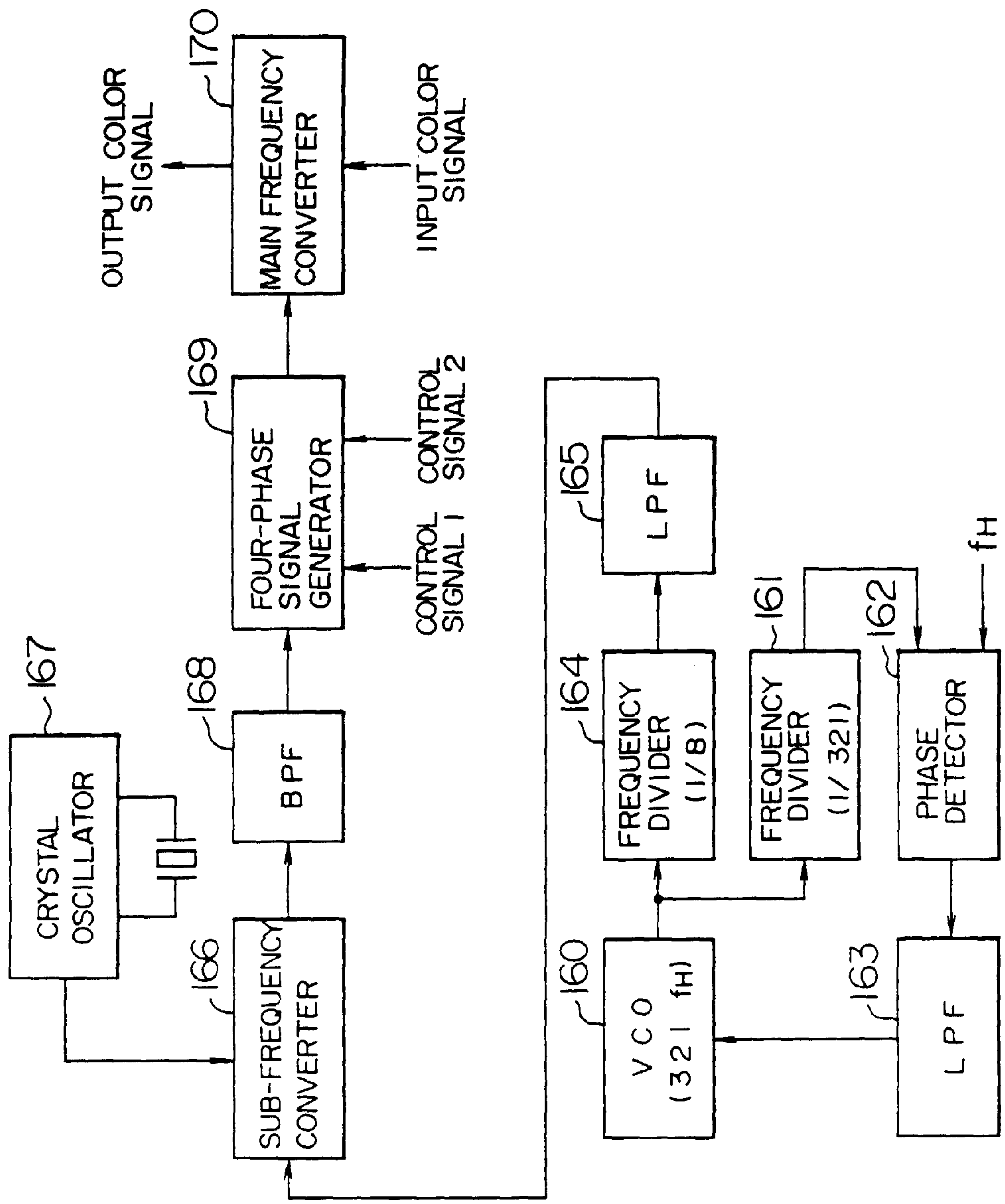
CRYSTAL OSCILLATOR
167
SUB-FREQUENCY CONVERTER
166
BPF
168
FOUR-PHASE SIGNAL GENERATOR
169
CONTROL SIGNAL 1
CONTROL SIGNAL 2
MAIN FREQUENCY CONVERTER
170
OUTPUT COLOR SIGNAL
INPUT COLOR SIGNAL
VCO (321 fH)
160
FREQUENCY DIVIDER (1/8)
164
LPF
165
FREQUENCY DIVIDER (1/321)
161
PHASE DETECTOR
162
fH
LPF
163